# EUROPÄISCHE PATENTSCHRIFT

(11) **EP 0 610 544 B1**
(45) Veröffentlichungstag und Bekanntmachung des Hinweises auf die Patenterteilung: **24.06.1998**
(21) Anmeldenummer: 93114262.4
(22) Anmeldetag: 06.09.1993
(51) Int. Cl.: A01K 63/06

(54) **Abdeckung für Aquarien, Terrarien od. dgl.**
Cover for aquaria, terraria or the like
Couvercle pour aquarium, terrarium ou analoque

(30) Priorität: 10.02.1993 DE 4303866
(43) Veröffentlichungstag der Anmeldung: 17.08.1994
(73) Patentinhaber: EHEIM GMBH & CO. KG, D-73779 Deizisau (DE)
(72) Erfinder: Wiedenmann, Walter, D-73777 Deizisau (DE); Herold, Ulrich, Dr., D-72644 Oberbohingen (DE); Frank, Gerhard, D-73730 Esslingen (DE); Mayer, Ferdinand, D-73525 Schwäbisch Gmünd (DE); Baier, Albert, D-73777 Deizisau (DE); Schmidt, Michael, D-71083 Herrenberg (DE); Plöger, Jörg, D-73666 Baltmannsweiler (DE)
(74) Vertreter: Kratzsch, Volkhard, Dipl.-Ing.

(56) Entgegenhaltungen:
- WO-A-91/15647
- FR-A- 1 151 593
- FR-A- 2 553 645
- GB-A- 1 529 801
- GB-A- 2 192 654
- GB-A- 2 226 940
- US-A- 3 250 585
- US-A- 3 857 366
- US-A- 5 065 884

## Beschreibung

Die Erfindung bezieht sich aus eine Abdeckung für Aquarien, Terrarien od.dgl., mit den Merkmalen im Oberbegriff des Anspruchs 1.

Es ist eine Abdeckung der eingangs genannten Art bekannt (DE-U- 79 25 998), bei der sich der Rahmen ununterbrochen über den gesamten Umfang des Aquariums erstreckt und aus profilierten Platten besteht, die auf den oberen Rand des Aquariums aufgesetzt sind. Die vom Rahmen umgrenzte Öffnung ist durch einen Deckel verschließbar, der um die im Bereich seines rückwärtigen Endes verlaufende horizontale Schwenkachse beidseitig an quer verlaufenden Teilen des Rahmens schwenkbar gehalten ist. An der Unterseite des Deckels ist eine Beleuchtungseinrichtung angebracht, die zum Aquarium hin mittels einer Wanne verschlossen ist, die an der Unterseite des Deckels dicht angebracht ist. Der Deckel erstreckt sich z.B. annähernd über etwa drei Viertel des Quermaßes des Rahmens und somit über einen wesentlichen Teil der in Querrichtung gemessenen Tiefe des Rahmens. Der verbleibende Öffnungsbereich des Rahmens, rückseitig der rückwärtigen Kante des Deckels, ist mittels eines zweiten Deckels in Form einer rückwärtigen Klappe verschlossen, die sich wie der vordere Deckel über das gesamte Längsmaß des Rahmens erstreckt und gegensinnig zum vorderen Deckel ebenfalls um eine horizontale Schwenkachse schwenkbar und somit nach vorn hochklappbar ist, wobei diese Schwenkachse mit derjenigen des vorderen Deckels zusammenfallen kann. Der etwa rechteckförmige Rahmen ist im Bereich der z.B. zusammenfallenden Schwenkachsen beider Deckel durch einen längs verlaufenden Steg unterteilt. Im vorderen Rahmenfach, dem der vordere Deckel zugeordnet ist, ist bei zugeklapptem Deckel die Beleuchtungseinrichtung aufgenommen. Im rückwärtigen Rahmenfach ist in Abstand unterhalb des rückwärtigen Deckels ein zusätzliches Bauteil in Form einer etwa horizontalen Trennwand enthalten, die Steckdosen, elektrische Regler, Thermometer oder andere Hilfseinrichtungen, z.B. auch Filter oder Pumpen, aufnehmen kann. Die Trennwand bildet damit ein besonderse Halteteil für diese vorgenannten Elemente. Um diese Gestaltung zu ermöglichen, muß der Rahmen durch den genannten zusätzlichen Steg unterteilt werden, wodurch der Rahmen aufwendig ist. Außerdem bedarf es nicht nur dieses zusätzlichen Steges, sondern auch der genannten zusätzlichen Trennwand und letztlich auch der noch zusätzlichen, in Abstand über dieser Trennwand befindlichen rückwärtigen Klappe, wodurch die Abdeckung insgesamt aufwendig wird.

Der vordere, die Beleuchtungseinrichtung tragende Deckel ist schon aufgrund der relativ schweren Beleuchtungseinrichtung ebenfalls relativ schwer. Das Hochklappen ist deswegen beschwerlich, da es einen nicht unerheblichen Kraftaufwand bedeutet. Hinzu kommt, daß man den hochgeklappten vorderen Deckel in der jeweils hochgeklappten Stellung je nach Öffnungswinkel festhalten muß, um ein selbsttätiges Zuklappen in die Schließstellung und sich dadurch ergebende Schäden zu vermeiden.

Bei einer anderen bekannten Aquariumabdeckung (US-A-3 857 366) hat der Deckel ein vorderes Paneel und ein hinteres Paneel , wobei der Deckel in dieser Form ein komplettes Gebilde darstellt. Im hinteren Paneel ist ein Teil der Abdeckfläche mit einer Vielzahl von entfernbaren Deckeln versehen, die mittels Verbindungsrippen (Sollbruchstellen) mit dem übrigen Material dieses hinteren Paneels einstückig sind. Diese Sollbruchstellen werden dann, wenn der eine oder andere Deckel entfernt werden soll, zerstört. Dann entsteht an dieser Stelle im rückwärtigen Paneel eine Öffnung, in die dann Aquariumzubehör eingesetzt werden kann, z.B. eine Heizung oder ein Luftfilter. Ist vom Benutzer einmal der eine oder andere Deckel aus dem rückwärtigen Paneel herausgebrochen worden, so ist dieser Bereich danach offen und nicht abgedeckt, sofern dort kein Aquariumzubehör eingesetzt wird.

Der Erfindung liegt die Aufgabe zugrunde, eine Abdeckung der eingangs genannten Art zu schaffen, die demgegenüber vereinfacht ist und einen Rahmen großer Festigkeit aufweist, wobei die Anbringung verschiedener Bauteile an verschiedenen Stellen nach Wahl für den Benutzer möglich ist einschließlich späterer Variationen und Abänderungen.

Die Aufgabe ist bei einer Abdeckung der eingangs genannten Art gemäß der Erfindung durch die Merkmale im Anspruch 1 gelöst. Die längs verlaufenden Teile des Rahmens in Gestalt der Profilleisten sind identisch, so daß nur ein Profil benötigt wird. Sie ermöglichen in gleicher Weise wie der Deckel eine Anpassung an unterschiedliche Längsmaße von Aquarien, wozu die Profilleisten dann auf das jeweils erforderliche Längsmaß abgeschnitten werden. Insbesondere als Strangpreßprofile, z.B. aus Aluminium, sind die Profilleisten relativ kostengünstig. Sie gewährleisten eine große Festigkeit, bedingt durch ihr Querschnittsprofil, wodurch die Profilleisten die Anbringung verschiedener Bauelemente und Teile an verschiedenen Stellen und Längsverschiebung nach Wahl des Benutzers oder Herstellers ermöglichen. Außerdem ermöglichen die Profilleisten in einfacher Weise auch am jeweiligen Ende eine schnelle, kostengünstige, lösbare und doch feste Verbindung mit dem jeweiligen Seitenteil des Rahmens.

Vorteilhafte Weiterbildungen enthalten die Ansprüche 2 bis 21. Aufgrund der Einzelmodule kann sich der Benutzer des Aquariums je Abdeckung so zusammensetzen, wie er sich wünscht. Die Einzelmodule ermöglichen auch spätere Variationen und Abänderungen. Sie haben zudem den Vorteil, daß etwaige Bauelemente, die sonst frei verlaufen, zumindest im oberseitigen Bereich der Abdeckung, mittels entsprechend gestalteter Einzelmodule, insbesondere Abdeckmodule, so abdeckbar sind, daß sich eine geschlossene Oberseite der Abdeckung des Aquariums ergibt. Die Einzelmodule vereinfachen ferner erheblich etwaige notwendige elektrische Anschlüsse und den Verlauf entsprechender Kabel und ferner auch etwaige Anschlüsse von Schläuchen an Rohrteile, z.B. Rohrknieteile, und die Anordnung letzterer. Diese lassen sich bei entsprechend gestaltetem Einzelmodul sauber und örtlich daran fixiert plazieren, wobei auch hier bedarfsweise für den Sichtabschluß ein Abdeckmodul vorgesehen werden kann. Die Einzelmodule in jeweils besonderer Gestaltung schaffen auch die Voraussetzungen dafür, rückseitig abgehende Kabel, Schläuche od. dgl. zusammenzufassen und als ein Strang zu führen, der gewünschtenfalls ebenfalls abdeckbar ist. Auch dies trägt zu einer sauberen, optisch ansprechenden und geschützten Bewältigung des Problems verlaufender Kabel, Schläuche, Rohrteile od.dgl. bei. Die Einzelmodule sind am hinteren Rahmenteil, z.B. der dortigen Profilleiste, und/oder am rückwärtigen Rand des Deckels abstützbar.

Eine weitere vorteilhafte Ausgestaltung ergibt sich aus Anspruch 22. Aufgrund der Antriebseinrichtung ist erreicht, daß mittels dieser der Deckel z.B. dann, wenn er aus einer geschlossenen Stellung entriegelt wird, selbsttätig geöffnet und aufgeklappt wird, zumindest über einen so großen Anfangsöffnungswinkelbereich, daß danach der Deckel von Hand weiter um die Schwenkachse geschwenkt und in Öffnungsrichtung bewegt werden kann. Der Anfangsöffnungswinkel ist dabei zweckmäßigerweise zumindest so groß, daß der Benutzer für die anschließende Handbetätigung des Deckels, sollte die Antriebseinrichtung eine solche notwendig machen, den Deckel in einer dafür günstigen Position vorfindet und leichter und ohne große Kraftanstrengung weiter öffnen kann. Der Gestaltung liegt die grundsätzliche Überlegung zugrunde, daß der Deckel im völlig geschlossenen Zustand, in dem der Deckel etwa waagerecht verläuft, aufgrund der mit größtem Hebelarm wirkenden Gewichtskraft des Deckels und insbesondere der relativ schweren Beleuchtungseinrichtung aus dieser horizontalen Schließposition vom Benutzer nur mit großer Kraftanstrenung angehoben werden kann und die Antriebseinrichtung erfindungsgemäß somit insbesondere diese Anfangsschwenkbetätigung aus der Schließstellung heraus zu bewirken hat und den Benutzer von der sonst notwendigen Kraftanstrengung entlasten soll. Die Antriebseinrichtung kann auch so dimensioniert und gestaltet sein, daß sie über den Anfangsöffnungswinkelbereich hinausgehend den Deckel selbsttätig aufklappen kann, so daß auch das weitere Aufklappen des Deckels von der Antriebseinrichtung bewirkt wird und der Benutzer auch davon entlastet ist.

Eine weitere vorteilhafte Ausgestaltung ergibt sich aus Anspruch 23. Dabei versteht es sich, daß als Federmotor oder dergleichen Federantrieb vielfältige, mit Federkraft arbeitende Antriebe in Frage kommen, und zwar solche, die durch handbetätigtes Schließen des Deckels Energie speichern, die nach Entriegeln des geschlossenen Deckels zum Öffnen dieses freigesetzt wird. Als Federantriebe sind z.B. solche auch mit Spiralfedern (Uhrwerksfedern) geeignet. Auch sonstige Energiespeicherantriebe, die nicht mit Federkraft arbeiten, liegen im Rahmen der Erfindung, z.B. Antriebe mit Unwuchten, Schwungscheiben od.dgl..

Eine weitere vorteilhafte Ausgestaltung ergibt sich aus Anspruch 24. Hierbei kann beidseitig des Deckels ein Federelement vorgesehen sein, z.B. eine Spiralfeder oder eine Blattfeder, die in diesem Bereich vom Deckel beaufschlagt wird und zum Öffnen des Deckels auf diesen arbeitet.

Besonders vorteilhaft ist eine Gestaltung gemäß Anspruch 25. da mittels einer Torsionsfeder bei kleinem Bauraum große Federkräfte und Schwenkmomente erzeugt werden können. Weitere vorteilhafte Erfindungsmerkmale und Ausgestaltungen enthalten die Ansprüche 26 bis 29, die zu einer besonders platzsparenden und einfachen sowie kostengünstigen Antriebseinrichtung auf Torsionsfederbasis führen.

Eine weitere vorteilhafte Ausgestaltung ergibt sich aus Anspruch 30, mit vorteilhaften Weiterbildungen in den Ansprüchen 31 und 32. Der jeweilige Seitenteil ist relativ einfach und kostengünstig. Er kann auf der Innenseite, von außen unsichtbar, nach innen vorspringende Stege, Leisten od.dgl. aufweisen, mit denen der jeweilige Seitenteil auf der Oberkante der jeweiligen Wandung des Aquariums aufsitzt. Aufgrund der Gestaltung als Kunststoffspritzteil und nur ein einziges Bauteil, das für beide quer verlaufende Seiten des Rahmens benutzbar ist, ist nur ein Werkzeug zur Herstellung notwendig. Dies führt zu relativ geringen Kosten, so daß die Seitenteile kostengünstig und auch relativ leicht gestaltet werden können, da die Gestaltung in Kunststoff durch Verrippung an geeigneten Stellen eine große Steifigkeit bei relativ geringem Gewicht ermöglicht.

Weitere vorteilhafte Erfindungsmerkmale und Ausgestaltungen ergeben sich aus den Ansprüchen 33 bis 39. Der beidseitig verwendbare Typus des Seitenteils ist an beiden Endbereichen so hergerichtet, daß dort das jeweilige Verriegelungselement z.B. durch Einschieben einsetzbar und halterbar ist. Auch das beidseitig vorgesehene Verriegelungselement ist ein einziges Bauteil, das links in der einen Position und rechts in der entsprechend umgedrehten Position verwendbar und einsetzbar ist, so daß auch insofern die Kosten reduziert sind. Der Deckel ist somit aufgrund der Verriegelungselemente im vorderen Bereich beidseitig formschlüssig in seiner Schließstellung verriegelbar. Damit ist gewährleistet, daß der Deckel immer geschlossen bleibt und nicht etwa selbsttätig aus irgendwelchen Gründen sich anheben kann oder z.B. bei größeren Erschütterungen hochflattern kann. Da im geschlossenen Zustand des Deckels die Antriebseinrichtung, insbesondere der Federmotor oder dergleichen Federantrieb, aufgeladen ist, bei Gestaltung als Federmotor der Federmotor gespannt ist, wirkt bei geschlossenem Deckel aufgrund des gespeicherten Öffnungsmoments eine Kraft, die den Deckel in Öffnungsrichtung gegen jedes Verriegelungselement drückt. Bei Betätigung der Verriegelungselemente zur Freigabe des Deckels steht sofort das Öffnungsmoment an, mittels dessen der Deckel selbsttätig über die Antriebseinrichtung geöffnet wird. Umgekehrt fallen beim Schließen des Deckels und Erreichen der Schließstellung die Verriegelungselemente selbsttätig in ihre den Deckel verriegelnde Riegelungsstellung.

Weitere vorteilhafte Ausgestaltungen ergeben sich aus den Ansprüchen 40 bis 42. Diese Gestaltung der Verriegelungselemente ist besonders einsach und kostengünstig. Deckelseitig reichen relativ kurze Vorsprünge, die in der Riegelstellung von den Sperrnasen der Verriegelungselemente übergriffen werden. Dementsprechend klein ist der Weg, der zum Entriegeln von den Verriegelungselementen bei Eindrücken dieser durchlaufen werden muß. Die beidseitigen Vorsprünge am Deckel können in kostengünstiger Weise durch ein längs durchlaufendes Profil verwirklicht sein.

Von Vorteil sind ferner die Merkmale in Anspruch 43, die ein Abtropfen von Wasser, das sich auf der Deckelunterseite gesammelt hat, nieder zurück in das Aquarium sicherstellen, so daß dieses Wasser nicht etwa z.B. im vorderen Bereich auf die Rahmenaußenseite gelangen kann.

Weitere vorteilhafte Maßnahmen ergeben sich aus den Ansprüchen 44 bis 46. Der Deckel ist somit als kostengünstiges Teil bereitzustellen, wobei der Deckel als Strangpreßteil jeweils auf die Länge abgetrennt wird, die je Aquariumabmessungen benötigt wird. Dadurch ist in einfacher, kostengünstiger Weise eine Anpassung der Deckellänge an verschiedene Längsmaße von Aquarien, Terrarien od.dgl. möglich.

Eine weitere vorteilhafte Ausgestaltung ergibt sich aus Anspruch 47. Die Bremseinrichtung hat den Vorteil, daß dadurch der Deckel in jeder Offnungsposition, vorzugsweise stufenlos, selbsttätig arretiert ist und von der Bedienungsperson somit nicht gehalten werden muß. Der Deckel kann vielmehr jederzeit losgelassen werden und verbleibt selbsttätig in der jeweils erreichten Öffnungsstellung. Durch diese Entlastung der Bedienungsperson hat diese nun die Hände frei, durch die geschaffene Öffnung im Rahmen der Abdeckung hindurch Arbeiten im Becken vorzunehmen. In vorteilhafter Weise kann dabei die Beleuchtungseinrichtung auf der Unterseite des Deckels eingeschaltet bleiben und entsprechende Arbeiten gut ausleuchten.

Weitere vorteilhafte Ausgestaltungen enthalten die Ansprüche 48 bis 71. Das Bremsglied in Form eines einstückigen Kunststofformteiles ist ebenfalls einfach und kostengünstig herstellbar. Es ist bedarfsweise auch durch die Steckmontage und Lagerung schnell austauschbar. Der Reibkörper des Bremsgliedes, insbesondere in Gestalt eines elastisch verformbaren Ringes, der beim Schwenken des Deckels über die Bremsfläche hinweg bewegt wird, mit der er in Bremskontakt steht, ermöglicht eine Verformung aus der Ringform heraus, z.B. zu irgendeinem schwachen Oval. Die Rückstellkräfte des elastisch verformbaren Ringes drücken diesen mit dem an der Bremsfläche anliegenden Teil stärker an und erzeugen die entsprechende Reibkraft. Ein derartiges Bremsglied ist bei großer Wirksamkeit einfach und kostengünstig und ermöglicht eine stufenfreie Schwenkung des Deckels und selbsttätige Offenhaltung dieses. Eine Verzahnungsbremse hingegen ermöglicht eine formschlüssige Sicherung des Deckels aufgrund des Verzahnungseingriffes z.B. zweier in Eingriff stehender Zahnräder und dabei eine Schwenkung in Raststufen.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: eine schematische perspektivische Ansicht der Oberseite eines Aquariums mit Abdeckung bei leicht geöffnetem Deckel,
- Fig. 2: eine schematische Seitenansicht des Verriegelungselements für den Deckel, in größerem Maßstab,
- Fig. 3: eine schematische Draufsicht des Verriegelungselements in Fig. 2,
- Fig. 4: eine schematische perspektivische Ansicht der Abdeckung in Fig. 1 bei gänzlich geöffnetem Deckel,
- Fig. 5: eine schematische, teilweise geschnittene Seitenansicht etwa entlang der Linie V - V in Fig. 1,
- Fig. 6: einen schematischen Schnitt lediglich des Deckels,
- Fig. 7 und 8: jeweils einen schematischen Schnitt der vorderen bzw. hinteren Profilleiste des Rahmens,
- Fig. 9: eine vereinfachte schematische Seitenansicht eines Bremsgliedes der Bremseinrichtung der Abdeckung,
- Fig. 10: einen schematischen Schnitt entlang der Linie X - X in Fig. 9 mit teilweiser Draufsicht des Bremsgliedes,
- Fig. 11: einen teilweisen schematischen horizontalen Schnitt des linken Seitenteils des Rahmens in Fig. 1,
- Fig. 12: eine schematische Vorderansicht mit teilweisem Schnitt des in Fig. 1 linken Eckbereichs der Abdeckung mit geschlossenem Deckel,
- Fig. 13: eine vereinfachte, zum Teil geschnittene Seitenansicht des Seitenteiles in Pfeilrichtung XIII in Fig. 11,
- Fig. 14: einen schematischen senkrechten Schnitt eines Teils des Deckels mit daran gehaltenem Drosselgehäuse der Beleuchtungseinrichtung,
- Fig. 15: eine schematische Draufsicht des Drosselgehäuses,
- Fig. 16: eine schematische Draufsicht der Beleuchtungseinrichtung,
- Fig. 17: eine schematische Draufsicht einer modifizierten Beleuchtungseinrichtung mit größerer Breite,
- Fig. 18: eine schematische perspektivische Ansicht des in Fig. 1 rechten Teils der Abdeckung mit eingehängtem Aquarium-Innenfilter,
- Fig. 19: eine schematische Seitenansicht einer Halteplatte mit Innenfilter daran,
- Fig. 20: eine schematische perspektivische Ansicht der Halteplatte in Fig. 19,
- Fig. 21: eine schematische Seitenansicht eines Abdeckmoduls,
- Fig. 22: eine schematische Seitenansicht eines Kastenmoduls,
- Fig. 23 und 24: eine schematische Ansicht in Pfeilrichtung XXIII bzw. XXIV in Fig. 22,
- Fig. 25: eine schematische perspektivische Ansicht eines Technikmoduls mit Uhr und Timer,
- Fig. 26: eine schematische Seitenansicht des oberen Gehäuses eines Heizmoduls,
- Fig. 27: eine Ansicht in Pfeilrichtung XXVII in Fig. 27 des Heizmoduls.

In den Zeichnungen ist eine Abdeckung 10 gezeigt, die für ein Aquarium 11, für Terrarien oder dergleichen bestimmt ist und auf das oben offene Ende des Aquariums 11 aufgesetzt ist. Das Aquarium 11 hat hier z.B. Rechteckform. Es ist aus vier Wandungen 12, z.B. Glaswandungen, zusammengesetzt.

Die Abdeckung 10 weist einen etwa rechteckförmigen Rahmen 13 und einen am Rahmen 13 um eine Schwenkachse 14 schwenkbar gelagerten, hochklappbaren Deckel 15 auf, an dessen Unterseite 16 eine Beleuchtungseinrichtung 17 gehalten ist.

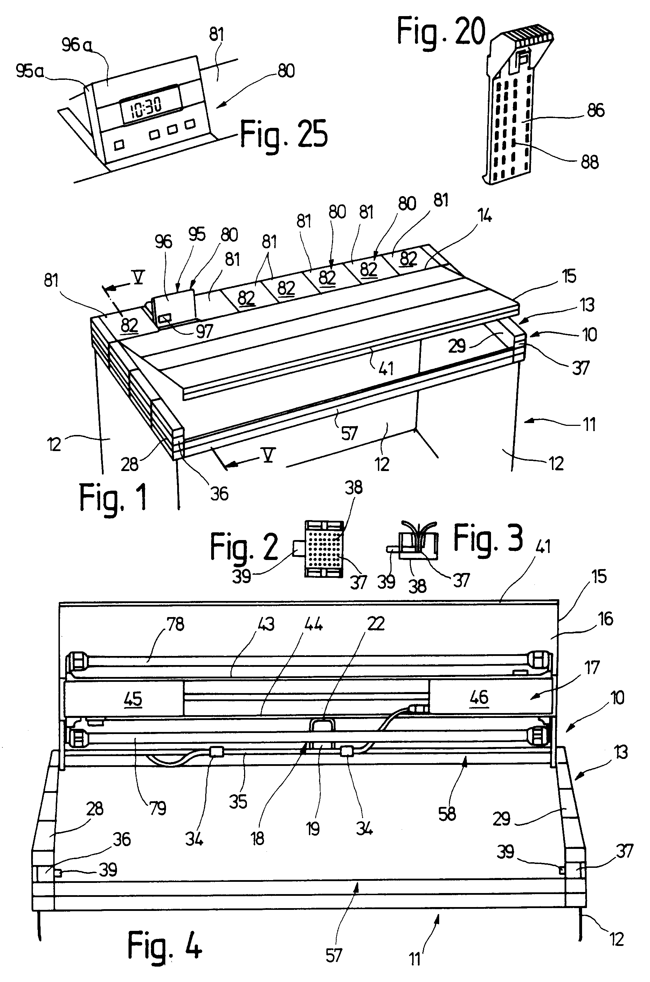

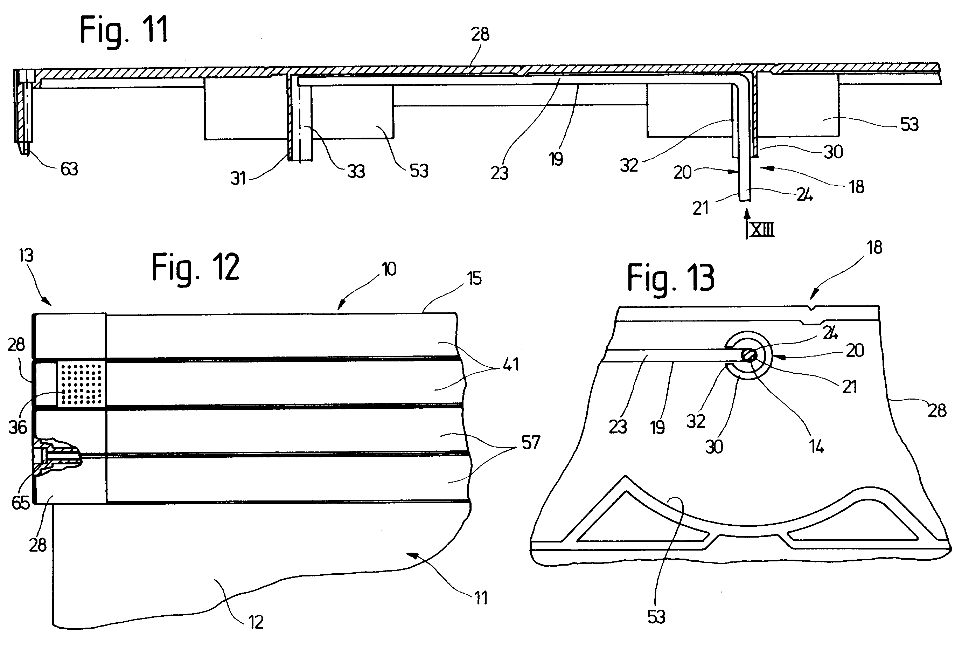

Die Abdeckung 10 weist eine zum Öffnen des Deckel 15 aktivierbare, am Deckel 15 angreifende Antriebseinrichtung 18 auf, mittels der der Deckel 15 selbsttätig aufklappbar ist, zumindest über einen Anfangsöffnungswinkelbereich. Die Antriebseinrichtung 18 weist einen beim Freigeben des Deckels 15 im Öffnungssinne zum Antrieb freigebbaren und durch Schließen des Deckels 15 aufladbaren Antriebsspeicher 19 auf, der z.B. aus einer Unwucht oder einem Federantrieb besteht. Die Antriebseinrichtung 18, insbesondere der Antriebsspeicher 19, weist zumindest ein am Deckel 15 angreifendes Federelement 20 auf, das beim Schließen des Deckels 15 stärker gespannt wird und beim Entriegeln des geschlossenen Deckels 15 diesen im Öffnungssinn mit einer Federkraft beaufschlagt. Das Federelement 20 ist derart bemessen, daß es den Deckel 15 im weiter aufgeklappten Zustand, der z.B. an den in Fig. 1 gezeigten Anfangsöffnungswinkelbereich beim weiteren Öffnen des Deckels 15 sich anschließt und z.B. in Fig. 4 gezeigt ist, zumindest im wesentlichen selbsttätig offen hält und das Gewicht des Deckels 15 mit daran gehaltener Beleuchtungseinrichtung 17 aufnimmt. Das Federelement 20 weist zumindest eine Torsionsfeder 21 auf. Es hat zumindest einen am Deckel 15, vorzugsweise von innen her, anliegenden und diesen beaufschlagenden Abschnitt 22 und mindestens einen am Rahmen 13 festgelegten Abschnitt 23, die beide über zumindest einen Torsionsstab 24 miteinander verbunden sind. Dabei ist dieses Federelement 20 etwa einem liegenden U entsprechend gestaltet, wobei in Fig. 11 und 13 der dort sichtbare Abschnitt 23 den einen U-Schenkel bildet und auf der gegenüberliegenden Seite ein entsprechender zweiter U-Schenkel vorgesehen ist, die beide am Rahmen 13 festgelegt sind. Der beide U-Schenkel 23 miteinander verbindende Basisteil des U weist etwa im Bereich der Längenmitte den Abschnitt 22 (Fig. 4) auf, der etwa schlaufenförmig hochgebogen ist und an der Innenseite 16 des Deckels 15 anliegt. Ausgehend von diesem schlaufenförmigen Abschnitt 22 führen beidseitig Stabteile bis hin zu den U-Schenkeln, wobei diese Stabteile jeweils einen Torsionsstab 24 bilden. Der etwa schlaufenförmige Abschnitt 22 ist im nicht vorgespannten Zustand des Federelements 20 unter einem Winkel von 90° oder größer, z.B. von 100°, in bezug auf die Ebene ausgerichtet, innerhalb der sich die beidseitigen Abschnitte 23 und die beidseitig des Abschnitts 22 abgehenden Torsionsstäbe 24 erstrecken. Ist der Deckel 15, wie in Fig. 4 gezeigt ist, gänzlich hochgeklappt, befindet sich das Federelement 20 somit im wesentlichen im entlasteten Zustand.

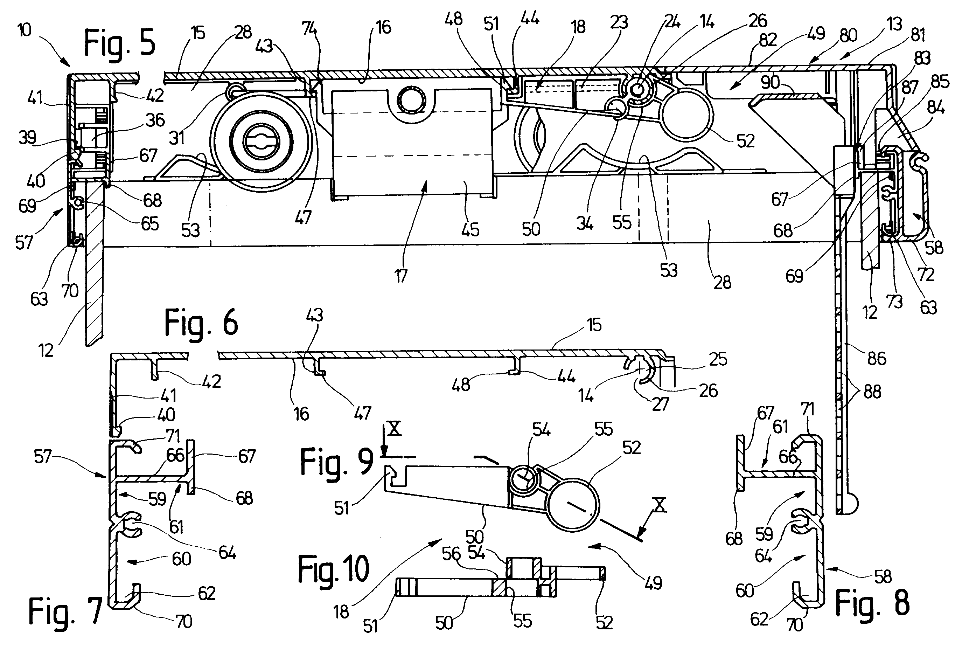

Wie insbesondere Fig. 5, 11 und 13 zeigen, verläuft jeder beidseitig des etwa schlaufenförmigen Abschnittes 22 sich erstreckende Torsionsstab 24 etwa koaxial zur Schwenkachse 14 des Deckels 15, wobei jeder Torsionsstab 24 innerhalb einer innenseitigen, vorzugsweise angeformten, Längsrinne 25 des Deckels 15 verläuft. Die Längsrinne 25 ist durch ein im Querschnitt sich zumindest über einen Kreisbogenabschnitt erstreckendes Rohrprofil 26 gebildet, das sich über die ganze Länge des Deckels 15 erstreckt und einen durchgehenden Schlitz 27 enthält.

Die beiden querverlaufenden Seitenteile 28, 29 des Rahmens 13 sind einander identisch und nur umgekehrt montiert, d.h. der rechte Seitenteil 29 ist mit seiner Innenseite um eine gedachte lotrechte Achse um 180° in bezug auf den linken Seitenteil 28 geschwenkt angeordnet. Einzelheiten sind daher zur Vereinfachung nachstehend anhand des Seitenteils 28 erläutert. Beide Seitenteile 28, 29 sind als Kunststoffspritzteile und hierbei vorzugsweise als nach innen sowie nach unten offene Kastenprofile ausgebildet. Der Seitenteil 28 weist einen hinteren Lagerzapfen 30 auf, der als Lagerzapfen für die Lagerung des Deckels 15 dient. Ferner ist ein vorderer Lagerzapfen 31 vorgesehen. Beide Lagerzapfen 30, 31 haben jeweils den gleichen Abstand vom Ende des Seitenteils 28. Beim anderen Seitenteil 29 ist es somit der Lagerzapfen 31, der für die Lagerung des Deckels 15 dient. Jeder Lagerzapfen 30, 31 steht über die Oberseite des Seitenteils 28 über und greift zumindest mit diesem überstehenden Endabschnitt in die dazu koaxiale Längsrinne 25, insbesondere das Rohrprofil 26, am Deckel 15 zu dessen Lagerung ein. Jeder Lagerzapfen 30, 31 ist als Hohlzapfen ausgebildet, der einen längsverlaufenden Schlitz 32 bzw. 33 enthält, wobei die Schlitze 32, 33 beider Lagerzapfen 30, 31 eines Seitenteils 28 an den einander zugewandten Seiten dieser Lagerzapfen 30, 31 vorgesehen sind (Fig. 11). Wie insbesondere Fig. 11 und 13 erkennen lassen, ist jeder Torsionsstab 24 mit seinem Übergangsbereich, der zum angrenzenden Abschnitt 23 (U-Schenkel) überleitet, im Bereich der Schwenkachse 14 des Seitenteils 28 durch dessen hohlen Lagerzapfen 30 hindurchgeführt, wobei der angrenzende Abschnitt 23 (U-Schenkel) durch den Schlitz 32 aus diesem Lagerzapfen 30 austritt und sich entlang dieses Seitenteils 28 bis hin zum Lagerzapfen 31 erstreckt, wobei das Ende des Abschnitts 23 in den Schlitz 33 dieses anderen Lagerzapfens 31 eingreift und darin formschlüssig gehalten ist. Wie sich aus Fig. 4 und 5 ergibt, kann jeder Torsionsstab 24, der sich innerhalb der Längsrinne 25 des Deckels 15 erstreckt, zugleich noch als Halter dienen, an dem z.B. mindestens eine Halteklammer 34, z.B. Kabelhalterung, angeklemmt ist. Die Halteklammer 34 hat z.B. gebogene Schenkel, die in die Längsrinne 25 passen und dort den Torsionsstab 24 formschlüssig übergreifen können. Die nach außen gerichtete Seite der Halteklammer 34 ist der anderen, in die Längsrinne 25 eingreifenden Seite identisch gestaltet. An dieser Außenseite kann zwischen diesen gebogenen Schenkeln z.B. ein Kabel 35 der Beleuchtungseinrichtung 17 fixiert werden.

Der Deckel 15 ist in seiner Schließstellung (Fig. 5, Fig. 12) mittels beidseitiger, am vorderen Längsrand des Deckels 15 angreifender Verriegelungselemente 36, 37 verriegelbar. Die Verriegelungselemente 36, 37 sind in zugeordneten Aufnahmen im vorderen Endbereich des jeweiligen Seitenteils 28, 29 verliersicher gehalten. Jedes Verriegelungselement 36, 37 ist als gegen Federkraft eindrückbare und unter Federkraft selbsttätig rückstellbare Taste 38 ausgebildet. Die Verriegelungselemente 36, 37 sind identisch und nur umgekehrt montiert. Die Taste 38 trägt eine abstehende Sperrnase 39, die in der Deckelschließstellung (Fig. 5) einen Vorsprung 40 am Deckel formschlüssig und sperrend übergreift und bei eingedrückter Taste 38 diesen Vorsprung 40 freigibt.

Der Deckel 15 ist als im wesentlichen flache Platte ausgebildet, die am vorderen Längsrand einen etwa rechtwinklig nach unten abstehenden Vorderschenkel 41 aufweist, an dem die jeweilige Sperrnase 39 jedes Verriegelungsgliedes 36, 37 angreift. Der Vorderschenkel 41 weist an seiner Unterseite und zumindest im Bereich beider Enden und der jeweiligen Sperrnase 39 den genannten horizontalen Vorsprung 40 auf, der vom Vorderschenkel 41 abgeht. Beim gezeigten Ausführungsbeispiel ist der Vorsprung 40 aus einer längsdurchgehenden Vorsprungleiste gebildet. In der Deckelschließstellung wird somit diese Vorsprungleiste am in Fig. 1 und 4 linken und rechten Ende von der jeweiligen Sperrnase 39 des Verriegelungselements 36 bzw. 37, und zwar von der Unterseite der Sperrnase 39, übergriffen. Wird die Taste 38 hineingedrückt, so wandert die Sperrnase 39 in Fig. 5 weiter nach innen und gibt somit den Vorsprung 40 und damit den Deckel 15 zum Öffnen frei.

Der Deckel 15 weist auf seiner Unterseite 16 in Abstand vom Vorderschenkel 41 einen nach unten abstehenden, vorzugsweise längsdurchlaufenden, Abtropfschenkel 42 (Fig. 5, 6) auf, an dem unterseitig des Deckels 15 evtl. befindliches Wasser heruntertropfen kann. Etwa im Mittelbereich weist der Deckel 15 auf seiner Unterseite 16 vorzugsweise längsdurchlaufende Halterungen in Gestalt zweier Winkelleisten 43, 44 auf, an denen lösbar Teile anbringbar und bedarfsweise in Längsrichtung verschiebbar sind, z.B. zwei einander gegenüberliegende Drosselgehäuse 45, 46 der Beleuchtungseinrichtung 17. Die Winkelleisten 43, 44 verlaufen in Querrichtung gesehen in Abstand voneinander und sind mit ihrem jeweils horizontalen Unterschenkel 47 bzw. 48 einander zugewandt, der zur Halterung der Drosselgehäuse 45, 46 von Teilen dieser übergriffen wird. Mit Vorzug ist der Deckel 15 ein einstückiges Gebilde und hierbei insbesondere als Strangpreßteil ausgebildet, vorzugsweise aus Aluminium. Er bildet somit ein relativ kostengünstig herstellbares und in sich steifes Element.

Die Antriebseinrichtung 18 weist eine Bremseinrichtung 49 auf, die beim gezeigten Ausführungsbeispiel auf jeder Seite im Bereich der Schwenkachse 14 des Deckels 15 zwischen letzterem und dem jeweiligen Seitenteil 28, 29 angeordnet ist und von der in Fig. 5, 9 und 10 lediglich Elemente der links angeordneten Bremseinrichtung 49 gezeigt sind. Mittels dieser wird der Deckel 15 im weiter aufgeklappten Zustand, z.B. gemäß Fig. 4, zumindest im wesentlichen selbsttätig offen gehalten, wobei die Bremseinrichtung 49 das Gewicht des Deckels 15 mit allen Teilen aufnehmen kann. Die Bremseinrichtung 49 arbeitet mit der Antriebseinrichtung 18 derart zusammen, daß der Deckel 15 mitsamt allen daran befindlichen Elementen in der weiter geöffneten Position gewichtsentlastet ist und jeweils selbsttätig offen gehalten wird, wobei die Bremseinrichtung 49 eine stufenlose Schwenkbewegung des Deckels 15 in Öffnungsrichtung bzw. Schließrichtung ermöglicht und der Deckel 15 in jeder Position selbsttätig gehalten ist, ohne daß es einer Halterung durch eine Bedienungsperson bedarf.

Die Bremseinrichtung 49 ist entweder - wie nicht gezeigt ist - als Verzahnungsbremse mit Verzahnungsrastung oder als Reibbremse ausgebildet. Sie weist auf jeder Deckelseite im Bereich des dortigen Seitenteils 28, 29 ein hebelförmiges Bremsglied 50 auf, das auf dem Lagerzapfen 30 des Seitenteils 28 um die Schwenkachse 14 schwenkbar gelagert ist und in Abstand davon mt einem am Ende angeordenten Haken 51 formschlüssig am Deckel 15 angreift. Der Haken 51 greift in die Winkelleiste 44 ein, wobei er deren Unterschenkel 48 übergreift. Dadurch wird das Bremsglied 50 beim Öffnen des Deckels 15 von diesem mitgenommen. Beim Schließen des Deckels 15 drückt dessen Unterseite 16 auf den Haken 51, wodurch auch dann das Bremsglied 50 mitgenommen wird. Das Bremsglied 50 weist einen um die Schwenkachse 14 konzentrisch bewegten Reibkörper 52 auf, der aus einem elastisch verformbaren Teil, insbesondere einem Ring, gebildet ist und sich zumindest in Grenzen unter Herstellung einer Klemmwirkung verformen kann. Dem Reibkörper 52 ist am Seitenteil 28 eine sich entlang der Schwenkbahn des Reibkörpers 52 erstreckende Bremsfläche 53 zugeordnet, auf die der Reibkörper 52 nach Öffnen des Deckels 15 und Schwenken um einen Anfangsöffnungswinkelbereich aufläuft und auf der der Reibkörper 52 beim weiteren Öffnen des Deckels 15 unter Verformung und unter Reibschluß entlangbewegt wird. Fig. 2 zeigt die geschlossene Stellung des Deckels 15, bei der der Reibkörper 52 noch außer Eingriff mit der Bremsfläche 53 ist. Wird der Deckel 15 durch Eindrücken der Verriegelungselemente 36, 37 entsperrt, so wird der Deckel aufgrund der Antriebseinrichtung 18, insbesondere des Federelements 20, zunächst durch Federkraft selbsttätig um einen gewissen Schwenkwinkel in Öffnungsrichtung geschwenkt, z.B. etwa so weit, wie dies in Fig. 1 gezeigt ist. Danach gelangt der Reibkörper 52 in Eingriff mit der Bremsfläche 53, und zwar in einen solchen Eingriff, bei dem der Reibkörper mit Ringform etwa elastisch verformt wird und die sich der Verformung entgegenstellende Rückstellkraft eine Anpreßkraft erzeugt, die den Reibkörper 52 mit seinem unteren Teil gegen die Bremsfläche 53 anpreßt. Der hierdurch erzeugte Reibschluß beidseitig des Deckels 15 reicht zusammen mit dem sich entspannenden Federelement 20 aus, den Deckel 15 weiter anzuheben und in geöffneter Stellung gewichtsentlastet offen zu halten. Der Deckel 15 kann bedarfsweise von Hand weiter geöffnet und losgelassen werden und wird auch dann in der neuen Öffnungsstellung selbsttätig durch die beschriebenen Mittel gehalten.

Das Bremsglied 50 weist eine zur Schwenkachse 14 koaxiale Lagerhülse 54 auf, mit der das Bremsglied 50 auf dem Lagerzapfen 30 schwenkbar gelagert ist. Ferner enthält das Bremsglied 50 eine zur Lagerhülse 54 koaxiale Lageraufnahme 55, die sich zum Inneren des Rahmens 13 hin axial an die Lagerhülse 54 anschließt, wie Fig. 10 zeigt, und in die der jeweilige Endabschnitt des Rohrprofils 26 am Deckel 15 axial eingreift, damit in diesem Endbereich eine Lagerung des Deckels 15 auf dem vorspringenden Ende des Lagerzapfens 30 erfolgen kann. Wie insbesondere Fig. 10 zeigt, stehen der Reibkörper 52, insbesondere Ring, und die Lagerhülse 54 beim Bremsglied 50 über die zum zugeordneten Seitenteil 28 hinweisende Außenseite 56 axial über. Das Bremsglied 50 ist als einstückiges Kunststofformteil ausgebildet, wobei das Bremsglied, das dem in Fig. 1 und 4 rechten Seitenteil 29 zugeordnet ist, als entsprechendes, rechtes Bremsglied mit dort über die Außenseite 56 überstehender Lagerhülse 54 und überstehendem Reibkörper 52 ausgebildet ist.

Die beiden längsverlaufenden Teile des Rahmens 13 sind einander identisch und aus Profilleisten 57, 58, insbesondere aus Aluminium-Strangpreßprofilen, gebildet. Beide Profilleisten 57, 58 sind zwischen beiden Seitenteilen 28, 29 plaziert und endseitig von letzteren übergriffen. Die Seitenteile 28, 29 sind etwa doppelt so hoch wie die Profilleisten 57, 58 bemessen und stehen über den oberen Rand der jeweiligen Profilleiste 57, 58 mit ihrer etwa halben Höhe über.

Der Vorderschenkel 41 des Deckels 15 weist eine etwa der halben Höhe der Seitenteile 28, 29 entsprechende Höhe auf, wie insbesondere Fig. 12 erkennen läßt. Bei geschlossenem Deckel 15 liegt dieser somit mit der Unterkante seines Vorderschenkels 41 etwa auf der Oberseite der vorderen Profilleiste 57 auf, während der Deckel 15 mit beiden querverlaufenden Seitenrändern etwa zwischen den beidseitigen Seitenteilen 28, 29 aufgenommen ist.

Die Profilleisten 57, 58 weisen im Querschnitt etwa zwei übereinanderstehende und im Bereich der Höhenmitte vereinigte 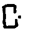 -Profile 59, 60 auf, bei denen sich an das obere 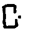 -Profil 60 innenseitig ein T-Profil 61 anschließt. Am unteren Rand weisen die Profilleisten 57, 58 eine Rinne 62 auf, in die beidseitig eine an dem jeweiligen Seitenteil 28, 29 angeformte und überstehende Nase 63 (Fig. 5) etwa formschlüssig eingreift. In Abstand oberhalb des unteren Randes und der Rinne 62 enthält jede Profilleiste 57, 58 auf der Innenseite eine rinnenförmige Aufnahme 64, in die beidseitig eine im dortigen Seitenteil 28, 29 gehaltene Befestigungsschraube 65 (Fig. 12) eingreifen kann. Ferner weisen die Profilleisten 57, 58 etwa in Höhe des ersten Viertels der Gesamthöhe einen nach innen vorspringenden Winkelschenkel 66 auf, dessen hochstehender Schenkel 67 als Stützschenkel und/oder Hängehalterung für einhängbare und/oder von oben her aufsetzbare bzw. daran abstützbare Bauelemente dient, wie später noch erläutert werden wird. Der Winkelschenkel 66 weist einen nach unten gerichteten Schenkelabschnitt 68 auf, der sich in Verlängerung des hochragenden Schenkels 67 erstreckt und der die Wandung 12 des Aquariums 11, Terrariums oder dergleichen, auf dessen Oberrand die Abdeckung 10 mit dem Rahmen 13 aufgesetzt ist, innenseitig übergreift (Fig. 5). Die vordere und hintere Wandung 12 ist dabei zwischen diesem innen übergreifenden Schenkelabschnitt 68 und den übrigen, nach innen abstehenden Schenkelteilen, insbesondere 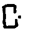 -Schenkeln, der Profilleisten 57, 58, die die Rinne 62 und Aufnahme 64 enthalten, aufgenommen (Fig. 5). Der Rahmen 13 ist dabei vorn und hinten mit dem jeweiligen horizontalen Schenkel 66 oben auf die obere Schmalfläche der vorderen bzw. hinteren Wandung 12 des Aquariums 11 aufgesetzt. Der Abstand zwischen dem innen übergreifenden Schenkelabschnitt 68 und den die Wandung 12 außen übergreifenden Teilen der Profilleisten 57, 58 ist ausreichend groß bemessen, so daß unterschiedlich dicke Wandungen 12 dazwischen Platz finden und auch ein Toleranzausgleich ermöglicht ist.

An den beidseitig verlaufenden Seitenteilen 28, 29 ist in Abstand oberhalb der Nase 63 eine nach innen vorspringende Lasche 69 angeformt, die in den Endbereich rückseitig der Profilleiste 57, 58 und unterhalb des horizontalen Schenkels 66 eingreift (Fig. 5).

Die Profilleisten 57, 58 weisen im Bereich des Oberrandes und des Unterrandes nach innen gerichtete Schenkel 70, 71 auf. Das Querschnittsprofil der Profilleisten 57, 58 bietet eine große Vielzahl von Anbringungsmöglichkeiten verschiedenster Teile. So können z.B. von außen her Halteelemente 72 auf die Profilleiste 58 aufgeschnappt werden, z.B. in Gestalt von Kabelhalteklammern, die z.B. einen etwa 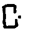 -förmigen Klammerteil 73 aufweisen, der die Profilleiste 58 auf der gesamten Höhe übergreift und die beiden Schenkel 70, 71 von außen her formschlüssig umgreift. Ferner bildet die zumindest hintere Profilleiste 58 mit ihrer Oberseite, die vom oberen Schenkel 71 gebildet wird, eine Stützfläche für darauf aufliegende Bauelemente, wie später noch erläutert werden wird.

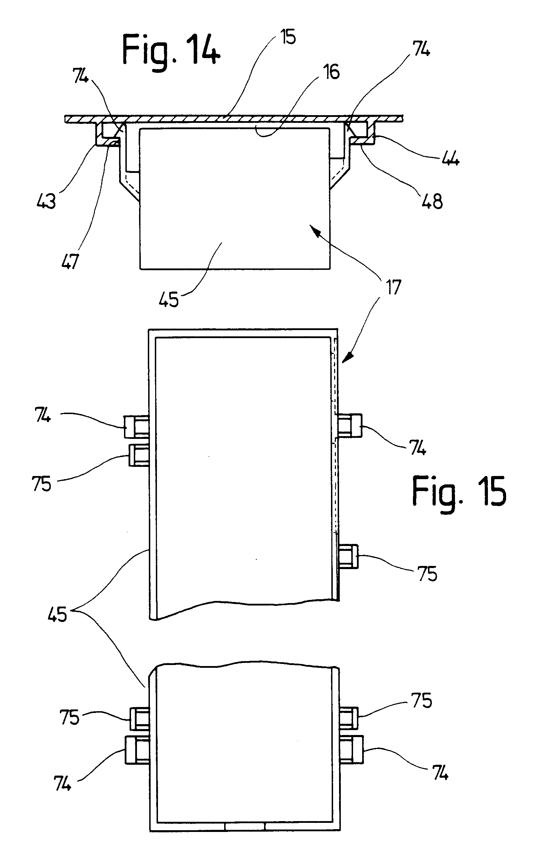

Die beiden Drosselgehäuse 45, 46 der Beleuchtungseinrichtung 17 sind zwischen den beiden unterseitigen Winkelleisten 43 und 44 am Deckel 15 z.B. lösbar aufgenommen und gehalten. Jedes Drosselgehäuse 45, 46 hat hierzu auf jeder Gehäuseseite z.B. zwei in Abstand voneinander angeordnete Schnapphaken 74, die mit ihrem hochragenden Hakenteil den zugeordneten Unterschenkel 47, 48 der Winkelleiste 43 bzw. 44 formschlüssig übergreifen. Die Schnapphaken 74 bestehen z.B. aus Kunststoff und sind zumindest in Grenzen einfederbar, wodurch ein leichtes Anbringen der Drosselgehäuse 45, 46 am Deckel 15 möglich ist und dennoch eine zuverlässig feste Fixierung gewährleistet ist. Bedarfsweise lassen sich die Drosselgehäuse 45, 46 auch lösen. Außerdem weist jedes Drosselgehäuse 45, 46 auf jeder Seite z.B. zwei in Abstand voneinander angeordnete, hochstehende Laschen 75 auf, die als Führungslaschen, Paßlaschen od. dgl. dienen und mit ihrer Außenseite an der zugewandten Randkante des Unterschenkels 47, 48 der jeweiligen Winkelleiste 43, 44 anliegen können, so daß dadurch jedes Drosselgehäuse 45, 46 in Fig. 14 in Querrichtung zwischen den Unterschenkeln 47, 48 fixiert ist. Die Halterung ermöglicht eine Längsverschiebung der Drosselgehäuse 45, 46 längs den Winkelleisten 43,44 und dadurch verschiedene lange Beleuchtungseinrichtungen 17 in Anpassung an das jeweilige Längsmaß des jeweiligen Aquariums 11.

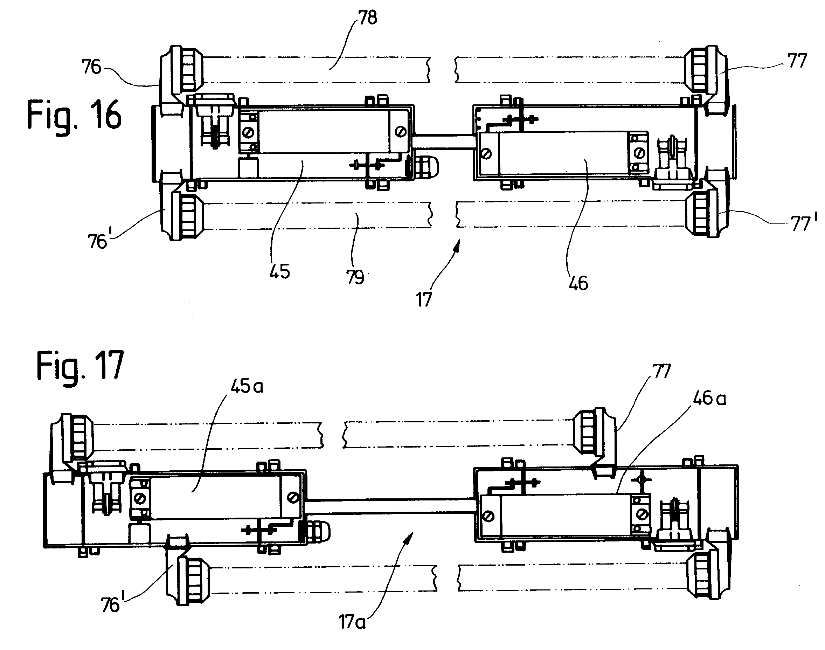

Jedes Drosselgehäuse 45, 46 weist auf jeder Gehäuseseite zwei in Abstand voneinander befindliche Befestigungsaufnahmen für eine Fassung 76, 76' bzw. 77, 77' auf, wobei zwischen den Fassungen 76 und 77 bzw. 76' und 77' je Seite eine Leuchtstoffröhre 78 bzw. 79 aufnehmbar ist. Die jeweilige gewünschte Befestigungsaufnahme je Gehäuseseite für die dortige Fassung 76, 76' bzw. 77, 77' kann bei der Herstellung des jeweiligen Drosselgehäuses 45, 46 gewählt und vorgegeben werden. Bei dem in Fig. 16 gezeigten Drosselgehäuse 45 sind beide Befestigungsaufnahmen für die Fassungen 76, 76' bei der Herstellung des Drosselgehäuses 45 so bestimmt worden, daß die Fassungen außen sitzen. Bei dem in Fig. 17 gezeigten Drosselgehäuse 45a ist hingegen bei der Herstellung dieses für die Fassung 76',77 eine Befestigungsaufnahme an anderer Stelle des Drosselgehäuses 45a, 46 a gewählt worden. Dadurch ist mit einfachen Mitteln ein größerer Bereich, gemessen in Längsrichtung der Abdeckung 10, mittels der Beleuchtungseinrichtung 17 bzw. 17a ausleuchtbar. Die Befestigungsaufnahmen, die je Drosselgehäuse nicht gewünscht werden, werden bei der Herstellung des jeweiligen Drosselgehäuses im Werkzeug mittels Schiebern verschlossen. Jedes Drosselgehäuse 45, 46 bzw. 45a, 46a besteht vorzugsweise aus Kunststoff.

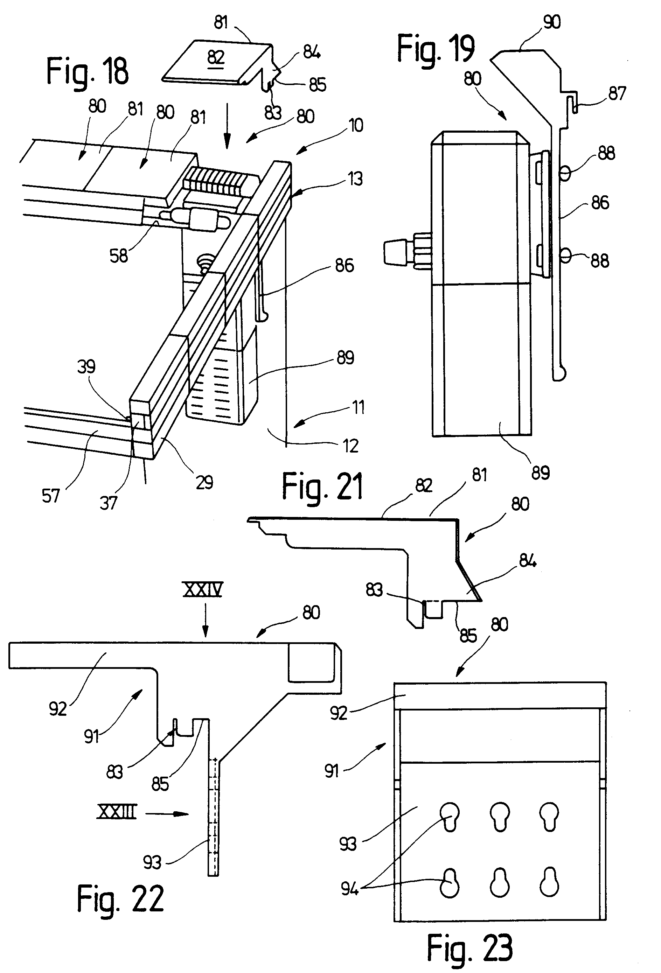

Die Abdeckung 10 ist ferner so gestaltet, daß sich der Deckel 15 über einen wesentlichen Teil, z.B. etwa über drei Viertel, der in Querrichtung gemessenen Tiefe des Rahmens 13 erstreckt, und daß der verbleibende rückwärtige Bereich mittels einzelner, wahlweise plazierbarer Einzelmodule 80 besetzbar ist, die bis zum rückwärtigen Rand des Deckels 15 reichen und am hinteren, längsverlaufenden Teil des Rahmens 13, insbesondere an der dortigen Profilleiste 58, lösbar halterbar sind. Derartige Einzelmodule 80 sind in Fig. 1 und in Fig. 18 bis 27 dargestellt. Sie haben eine in Längsrichtung der Abdeckung 10 gemessene jeweils gleiche Breite und sind somit einem Rastermaß entsprechend dimensioniert. Für solche Abdeckungen 10, deren Längsmaß sich nicht mit dem Raster deckt, ist als mindestens ein Einzelmodul 80 ein Maßausgleichsmodul vorgesehen.

Die Einzelmodule 80 können z.B. als Abdeckmodule 81 ausgebildet sein, wie solche überwiegend in Fig. 1 im rückwärtigen Bereich des Deckels 15 vorgesehen sind. Ein Abdeckmodul 81 ist in Fig. 18 und 21 gezeigt. Die Abdeckmodule 81 weisen einen oberen abdeckenden Deckelteil 82 auf, der von der Rückseite des Rahmens 13 bis hin zur Rückseite des Deckels 15 reicht und diesen rückwärtigen Bereich verschließt. Die Einzelmodule 80, z.B. die Abdeckmodule 81, enthalten vorzugsweise beidseitig einen vertikalen, nach unten offenen Schlitz 83 im Seitenwandteil. Sie sind von oben her auf die untere Profilleiste 58 aufsetzbar, wobei der hochragende Schenkel 67 der Profilleiste 58 in den Schlitz 83 im wesentlichen paßgenau und somit formschlüssig eingreift. Die beidseitig des Schlitzes 83 verlaufenden Wandteile gewährleisten eine Abstützung am hochstehenden Schenkel 67. Das jeweilige Einzelmodul 80, insbesondere Abdeckmodul 81, ist somit in vertikaler Richtung auf dem Schenkel 67 abstützbar. Außerdem ist das Einzelmodul 80, z.B. Abdeckmodul 81, vorzugsweise beidseitig mit der Unterseite von Wandteilen, die sich an den Schlitz 83 anschließen, auf dem oberen Schenkel 71 der hinteren Profilleiste 58 abstützbar, auf der das Einzelmodul 80, insbesondere Abdeckmodul 81, aufsitzen kann. Statt der einen oder anderen Abstützung auf der Profilleiste 58 oder zusätzlich dazu ist jedes Einzelmodul auch auf dem rückwärtigen Rand des Deckels 15 abstützbar. Wie in Fig. 21 am Beispiel des dortigen Einzelmoduls 80, insbesondere Abdeckmoduls 81, gezeigt ist, weist dieses einen rückwärtigen, über die hintere Profilleiste 58 hinausragenden und nach unten offenen Kastenteil 84 auf, durch den Kabel, Schläuche od. dgl. hindurch und nach außen führbar sind. Der Kastenteil 84 kann mit der Unterkante 85 beider Seitenwandteile auf der Oberseite der Profilleiste 58 aufsitzen, wie Fig. 5 zeigt.

Da nicht jedes Abdeckmodul 81 die Hindurchführung von Kabeln, Schläuchen od. dgl. und Abführung nach außen ermöglichen muß, sind die anderen Abdeckmodule 81 nicht mit diesem nach hinten überkragenden Kastenteil 84 versehen.

In Fig. 18 bis 20 ist ferner gezeigt, daß das dortige Einzelmodul 80 eine Halteplatte 86 mit oberem Einhängehaken 87 aufweist, mit dem die Halteplatte 86 vorzugsweise innenseitig an der hinteren Profilleiste 58, und dort am hochstehenden Schenkel 67, anhängbar ist. Auf diese Weise kann somit an der hinteren Profilleiste 58 bedarfsweise dieser Typus von Einzelmodul 80 schnell und einfach durch Einhängen angebracht werden, der in gleicher Weise leicht wieder abgelöst werden kann. Die Halteplatte 86 weist Halteeinrichtungen 88, z.B. Öffnungen und Halter, auf, die die Anbringung eines Bauelements 89 daran ermöglichen, das z.B. aus einem Aquarium-Innenfilter besteht. Die Halteplatte 86 weist hier eine oberseitige Überdachung 90 auf. Die mit dem Bauelement 89 versehene Halteplatte 86 wird auf den hochstehenden Schenkel 67 aufgesetzt und dort mit ihrem Einhängehaken 87 eingehängt. Die elektrischen Kabel des Bauelements 89 werden z.B. unterhalb der Überdachung 90 nach hinten und herausgeführt. Im Bereich der in das Aquarium 10 eingesetzten Halteplatte 86 wird sodann ein Abdeckmodul 81 aufgesetzt, durch dessen rückwärtig überkragenden Kastenteil 84 das elektrische Kabel hindurch nach hinten abgeführt wird.

In Fig. 22 bis 24 ist ein Einzelmodul 80 gezeigt, das als Schnittstelle für einen nicht weiter gezeigten Außenfilter dient und als Kastenmodul 91 ausgebildet ist, welches einen zumindest überwiegend nach oben und unten offenen Kasten 92 mit vertikaler Halteplatte 93 und Halteeinrichtungen 94, z.B. Öffnungen, in letzterer aufweist. Die Halteeinrichtungen dienen zur Aufnahme und Befestigung nicht weiter gezeigter Rohr- und/oder Schlauchteile, auch z.B. von etwa U-förmigen Rohrteilen, die von außen her durch den Kasten 92 hindurch und von oben nach unten in das Aquarium 10 hineinreichen. An diesen Rohr- und/oder Schlauchteilen erfolgt der Anschluß zum nicht weiter gezeigten Außenfilter in üblicher Weise. Die Rohr- und/oder Schlauchteile sind somit mittels des Kastenmoduls 91 von außen her in das Innere des Aquariums geleitet, wobei sie mittels der Halteeinrichtungen 94 an der Halteplatte 93 fixierbar sind. Das Kastenmodul 91 hat in gleicher Weise wie ein Abdeckmodul 81 vorzugsweise beidseitig in Seitenwandteilen einen nach unten offenen Schlitz 83, in den beim Aufsetzen des Kastenmoduls 91 der hochstehende Schenkel 67 der Profilleiste 58 formschlüssig eingreift. Mit der Unterkante 85 kann das Kastenmodul 91 beidseitig auf der Oberseite der Profilleiste 58 aufsitzen, wie dies im Zusammenhang mit dem Abdeckmodul 81 erläutert ist. Die Halteplatte 93 verläuft dabei außerhalb des Aquariums 10. Das Kastenmodul 91 ist mittels einer Platte oder eines Abdeckmoduls 81 oberseitig abdeckbar, so daß sich dann auf der Oberseite der Abdeckung 10 ein glattes durchlaufendes Bild analog Fig. 1 ergibt.

In Fig. 1 ist dargestellt, daß ein Einzelmodul 80 als Technikmodul 95 gestaltet ist, das eine hochstehende, vorzugsweise pultartig schrägverlaufende, Vorderseite 96 aufweist. Dieses Technikmodul 95 ist hier als Schaltermodul ausgebildet, das einen nicht weiter herausgestellten elektrischen Schalter mit Kabel und Steckverbindung in einem geschlossenen Gehäuse enthält, das durch die Vorderseite 96 abgeschlossen ist, wobei der Schaltknopf 97 im Bereich der Vorderseite 96 angeordnet und dort von außen her betätigbar ist. Beim Schalter handelt es sich um einen Ein-Ausschalter, mit dem von Hand z.B. die Beleuchtungseinrichtung 17 oder insbesondere ein Bauelement 89, z.B. in Gestalt des Innenfilters, geschaltet wird. In Fig. 25 ist ein anderes Technikmodul 95a als Alternative zum Technikmodul 95 dargestellt. Dieses Technikmodul 95a enthält eine Uhr mit Timer und Display, angebracht an der Vorderseite 96a. Dabei kann es möglich sein, das Technikmodul 95 mit dem einfachen Schalter durch Austausch der Vorderseite 96 gegen die Vorderseite 96a des anderen Technikmoduls 95a umzurüsten. Hierzu bedarf es lediglich des Ablösens der Vorderseite 96 mit daran befindlichem Schalter und elektrischem Anschlußkabel, dessen Stecker aus der im Gehäuse des Technikmoduls 95 verbleibenden Steckerkupplung herauszuziehen ist. Dieses Element wird dann durch die Vorderseite 96a ersetzt, an der der Timer mit Uhr und Display einschließlich elektrischem Kabel vorgesehen sind, dessen Stecker lediglich in die im Gehäuse verbliebene Steckerkupplung wieder einzustecken und dessen Vorderseite 96a danach wieder zu befestigen ist. Statt dessen kann natürlich die Abdeckung 10 auch von vornherein statt des Technikmoduls 95 gleich das Technikmodul 95a aufweisen. Auch das Technikmodul 95a wird in gleicher Weise, wie erläutert, auf die hintere Profilleiste 58 aufgesteckt.

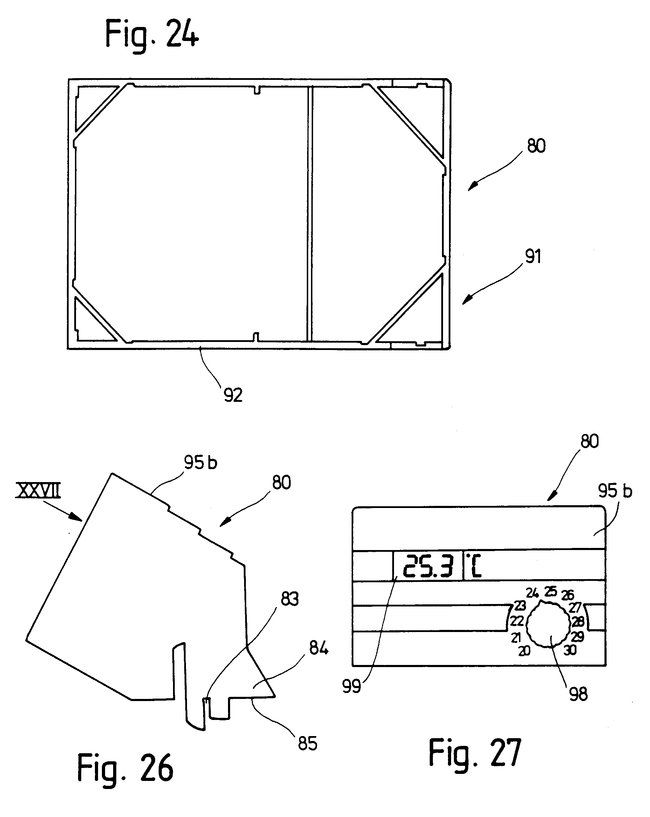

In Fig. 26 und 27 ist ein anderes Technikmodul 95b gezeigt, das als Heizmodul ausgebildet ist und ein hier nicht weiter dargestelltes Heizelement aufweist, welches von oben her in das Aquarium 10 hineinreicht. Ferner weist dieses Heizmodul einen von Hand betätigbaren Temperaturregler 98 und eine Temperaturanzeige 99 auf. Auch dieses Technikmodul 95b enthält beidseitig in Seitenwandteilen einen nach unten offenen Schlitz 83, in den beim Aufsetzen der hochstehende Schenkel 67 der Profilleiste 58 formschlüssig eingreift. Ferner ist auch hier in gleicher Weise wie beim Technikmodul 95 und 95a und beim Abdeckmodul 81 gemäß Fig. 21 ein rückwärtiger überkragender und nach unten offener Kastenteil 84 vorgesehen, durch den elektrische Kabel hindurch nach außen geführt werden, wobei die Seitenwandteile mit der Unterkante 85 auf der Profilleiste 58 aufsitzen können.

Als weitere Technikmodule analog den erläuterten Technikmodulen 95, 95a, 95b sind z.B. ein pH-Wert-Regelungsmodul oder ein Wasserstands-Regel-Modul oder ein Wasserleitwert-Erfassungs-Modul oder ein Lichtstärkeüberwachungsmodul für die Beleuchtungseinrichtung 17 oder dergleichen sonstiges Modul vorgesehen, mittels dessen weitere Kriterien überwacht, gesteuert und/oder geregelt werden können.

## Patentansprüche

1. Abdeckung für Aquarien, Terrarien od. dgl., mit einem etwa rechteckförmigen Rahmen (13) und einem am Rahmen (13) um eine Schwenkachse (14) gelagerten, hochklappbaren Deckel (15), an dessen Unterseite (16) eine Beleuchtungseinrichtung (17) gehalten ist, wobei sich der Deckel (15) über einen wesentlichen Teil der in Querrichtung gemessenen Tiefe des Rahmens (13) erstreckt,
**dadurch gekennzeichnet,**
daß die beiden längs verlaufenden Teile des Rahmens (13) aus einander identischen vorderen und hinteren Profilleisten (57, 58) gebildet sind, die sich zwischen zwei quer verlaufenden Seitenteilen (28, 29) des Rahmens (13) erstrecken und endseitig von diesen übergriffen sind, daß zumindest die hintere Profilleiste (58) mit ihrer Oberseite eine Stützfläche für Bauelemente od.dgl. bildet und einen nach innen vorspringenden Winkelschenkel mit horizontalem Schenkel (66) aufweist, dessen hochstehender Schenkel (67) für die Bauelemente od.dgl. als Stützschenkel und/oder Hängehalterung dient, und daß der im Anschluß an den Deckel (15) verbleibende und bis zur hinteren Profilleiste (58) reichende rückwärtige Bereich mittels der einzelnen wahlweise plazierbaren Bauelemente od.dgl. besetzbar ist, die einerseits bis zum rückwärtigen Rand des Deckels (15) reichen und andererseits an der hinteren Profilleiste (58) lösbar halterbar sind.

2. Abdeckung nach Anspruch 1,
**dadurch gekennzeichnet,**
daß die Profilleisten (57, 58) aus Aluminium-Strangpreßprofilen gebildet sind.

3. Abdeckung nach Anspruch 1 oder 2,
**dadurch gekennzeichnet,**
daß der nach innen vorspringende Winkelschenkel mit horizontalem Schenkel (66) etwa in Höhe des ersten Viertels der Gesamthöhe der Profilleisten (57, 58) vorgesehen ist.

4. Abdeckung nach einem der Ansprüche 1 bis 3,
**dadurch gekennzeichnet,**
daß die Bauelemente od.dgl. aus Einzelmodulen (80) bestehen.

5. Abdeckung nach Anspruch 4,
**dadurch gekennzeichnet,**
daS als Einzelmodule (80) Abdeckmodule (81) vorgesehen sind, die einen oberen abdeckenden Deckelteil (82) aufweisen.

6. Abdeckung nach Anspruch 4,
**dadurch gekennzeichnet,**
daS als Einzelmodul (80) eine Halteplatte (86) mit oberem Einhängehaken (87) vorgesehen ist, mittels dessen diese außenseitig oder vorzugsweise innenseitig an der hinteren Profilleiste (58), insbesondere am hochstehenden Schenkel (67) dieser, anhängbar ist, und daß die Halteplatte (86) Halteeinrichtungen (88), z.B. Öffnungen, zum Anbringen eines Bauelements (89), z.B. eines Aquarium-Innenfilters, daran aufweist.

7. Abdeckung nach Anspruch 6,
**dadurch gekennzeichnet,**
daS die Halteplatte (86) eine oberseitige Überdachung (90) aufweist.

8. Abdeckung nach Anspruch 6 oder 7,
**dadurch gekennzeichnet,**
daß die eingehängte Halteplatte (86) oberseitig mittels eines Abdeckmoduls (81) überdeckbar ist.

9. Abdeckung nach Anspruch 4,
**dadurch gekennzeichnet,**
daß als Einzelmodul (80) ein Kastenmodul (91) mit Halteplatte (93) und Halteeinrichtungen (94), z.B. Öffnungen, darin zur Aufnahme von Rohr- und/oder Schlauchteilen, z.B. zum Anschluß eines Aquarium-Außenfilters, vorgesehen ist.

10. Abdeckung nach Anspruch 9,
**dadurch gekennzeichnet,**
daß das Kastenmodul (91) oberseitig mittels eines Abdeckmoduls (81) abdeckbar ist.

11. Abdeckung nach Anspruch 4,
**dadurch gekennzeichnet,**
daß als Einzelmodul (80) ein Technikmodul (95, 95a, 95b) vorgesehen ist, das eine hochstehende, vorzugsweise etwa pultartig schräg verlaufende Vorderseite (96, 96a) aufweist.

12. Abdeckung nach Anspruch 11,
**dadurch gekennzeichnet,**
daß das Technikmodul (95) als Schaltermodul ausgebildet ist, das einen elektrischen Schalter mit Kabel und Steckverbindung in einem geschlossenen Gehäuse enthält, dessen Schaltknopf (97) im Bereich der Vorderseite (96) angeordnet und von außen her betätigbar ist.

13. Abdeckung nach Anspruch 11,
**dadurch gekennzeichnet,**
daß als Technikmodul (95a) ein mit einem Timer versehenes Uhrmodul vorgesehen ist.

14. Abdeckung nach Anspruch 12 oder 13,
**dadurch gekennzeichnet,**
daß die den Schalter tragende Vorderseite (96) des Technikmoduls (95), insbesondere Schaltermoduls, lösbar und gegen eine Vorderwand (96a) austauschbar ist, die eine Uhr mit Timer aufweist, wobei die elektrische Trennung bzw. Verbindung im bereich der Steckerverbindung durch Abziehen des Steckers des einen und Einstecken des Steckers des anderen erfolgt.

15. Abdeckung nach einem der Ansprüche 11 bis 14,
**dadurch gekennzeichnet,**
daß als Technikmodul (95b) bin Heizmodul vorgesehen ist, das ein in das Aquarium (10) reichendes Heizelement, einen betätigbaren Temperaturregler (98) und eine Temperaturanzeige (99) aufweist.

16. Abdeckung nach einem der Ansprüche 11 bis 15,
**dadurch gekennzeichnet,**
daß als Technikmodul ein pH-Wert-Regelungs-Modul oder ein Wasserstandsregel-Modul oder ein Wasserleitwert-Erfassungs-Modul oder ein Leuchtstärke-Überwachungsmodul oder dergleichen Modul vorgesehen ist.

17. Abdeckung nach einem der Ansprüche 4 bis 16,
**dadurch gekennzeichnet,**
daß das Einzelmodul (80) vorzugsweise beidseitig einen vertikalen, nach unten offenen Schlitz (83) im Seitenwandteil enthält und damit auf den hochstehenden Schenkel (67) der hinteren Profilleiste (58) aufsteckbar ist.

18. Abdeckung nach Anspruch 17,
**dadurch gekennzeichnet,**
daß das Einzelmodul (80) am hochstehenden Schenkel (67) der hinteren Profilleiste (58) abstützbar ist.

19. Abdeckung nach einem der Ansprüche 4 bis 18,
**dadurch gekennzeichnet,**
daß das Einzelmodul (80), vorzugsweise beidseitig, mit der Unterkante (85) von Wandteilen auf der Oberseite der hinteren Profilleiste (58) aufsitzt.

20. Abdeckung nach einem der Ansprüche 4 bis 19,
**dadurch gekennzeichnet,**
daß das Einzelmodul (80) auf dem angrenzenden rückwärtigen Rand des Deckels (15) abstützbar ist.

21. Abdeckung nach einem der Ansprüche 4 bis 20,
**dadurch gekennzeichnet,**
daß das Einzelmodul (80), insbesondere Technikmodul (95, 95a, 95b) und/oder Abdeckmodul (81), einen rückwärtigen, über die hintere Profilleiste (58) hinausragenden und nach unten offenen Kastenteil (84) aufweist, durch den Kabel, Schläuche od.dgl. hindurch nach außen führbar sind.

22. Abdeckung nach einem oder mehreren der vorhergehenden Ansprüche,
**gekennzeichnet durch**
eine zum Öffnen des Deckels (15) aktivierbare, am Deckel (15) angreifende Antriebseinrichtung (18), mittels der der Deckel (15) selbsttätig aufklappbar ist, zumindest über einen Anfangsöffnungswinkelbereich.

23. Abdeckung nach Anspruch 22,
**dadurch gekennzeichnet,**
daß die Antriebseinrichtung (18) einen beim Freigeben des Deckels (15) im Öffnungssinne zum Antrieb freigebbaren und durch Schließen des Deckels (15) aufladbaren Antriebsspeicher (19), z.B. einen Federmotor oder dergleichen Federantrieb, aufweist.

24. Abdeckung nach Anspruch 22 oder 23,
**dadurch gekennzeichnet,**
daß die Antriebseinrichtung (18) ein am Deckel (15) angreifendes Federelement (20) ausweist, das beim Schließen des Deckels (15) stärker gespannt wird und beim Entriegeln des geschlossenen Deckels (15) diesen im Öffnungssinn mit einer Federkraft beaufschlagt, und vorzugsweise daß das Federelement (20) derart bemessen ist, daß es den Deckel (15) im weiter aufgeklappten Zustand zumindest im wesentlichen selbsttätig offen hält und das Deckelgewicht aufnimmt.

25. Abdeckung nach Anspruch 24,
**dadurch gekennzeichnet,**
daß das Federelement (20) zumindest eine Torsionsfeder (21) aufweist.

26. Abdeckung nach Anspruch 24 oder 25,
**dadurch gekennzeichnet,**
daß das Federelement (20) zumindest einen am Deckel (15), vorzugsweise von innen her, anliegenden und diesen beaufschlagenden Abschnitt (22) und mindestens einen am Rahmen (13) festgelegten Abschnitt (23) aufweist, die beide über zumindest einen Torsionsstab (24) miteinander verbunden sind.

27. Abdeckung nach einem der Ansprüche 24 bis 26,
**dadurch gekennzeichnet,**
daß das Federelement (20) etwa einem liegenden U entsprechend gestaltet ist, wobei jeder U-Schenkel am Rahmen (13) festgelegt ist, während der beide Schenkel (23) verbindende Basisteil einen etwa schlaufenförmig hochgebogenen Abschnitt (22) aufweist, wobei der etwa schlaufenförmige Abschnitt (22) den am Deckel (15) anliegenden Abschnitt bildet und die beidseitig davon abgehenden und bis zu den U-Schenkeln (23) verlaufenden Stabteile jeweils einen Torsionsstab (24) bilden, und daß der etwa schlaufenförmige Abschnitt (22) im nicht vorgespannten Zustand des Federelements (20) unter einem Winkel von etwa 90° oder größer in Bezug auf die Ebene verläuft, innerhalb der sich die beiden Schenkel (23) und die Torsionsstäbe (24) erstrecken.

28. Abdeckung nach Anspruch 26 oder 27,
**dadurch gekennzeichnet,**
daß jeder Torsionsstab (24) etwa koaxial zur Schwenkachse (14) des Deckels (15) verläuft.

29. Abdeckung nach einem der Ansprüche 26 bis 28,
**dadurch gekennzeichnet,**
daß jeder Torsionsstab (24) innerhalb einer innenseitigen, vorzugsweise angeformten, Längsrinne (25) des Deckels (15) verläuft.

30. Abdeckung nach einem der Ansprüche 1 bis 29,
**dadurch gekennzeichnet,**
daß die beiden quer verlaufenden Seitenteile (28, 29) des Rahmens (13) einander identisch sind und der eine mit seiner Innenseite um eine lotrechte Achse um 180° geschwenkt in Bezug auf den anderen angeordnet ist.

31. Abdeckung nach Anspruch 30,
**dadurch gekennzeichnet,**
daß die Seitenteile (28, 29) als Kunststoffspritzteile und hierbei vorzugsweise als nach innen und unten offene Kastenprofile ausgebildet sind.

32. Abdeckung nach einem der Ansprüche 1 bis 31,
**dadurch gekennzeichnet,**
daß jeder Seitenteil (28, 29) in jeweils gleichem Abstand vom Ende einen nach innen vorspringenden Lagerzapfen (30, 31) aufweist, von denen jeweils der hintere als Lagerzapfen für den Deckel (15) dient.

33. Abdeckung nach Anspruch 32,
**dadurch gekennzeichnet,**
daß der jeweilige Lagerzapfen (30) in die am Deckel (15) vorzugsweise angeformte Längsrinne (25) eingreift.

34. Abdeckung nach einem der Ansprüche 29 bis 33,
**dadurch gekennzeichnet,**
daß die Längsrinne (25) am Deckel (15) durch ein im Querschnitt sich zumindest über einen Kreisbogenabschnitt erstreckendes Rohrprofil (26) gebildet ist, das einen längs durchgehenden Schlitz (27) ausweist.

35. Abdeckung nach einem der Ansprüche 32 bis 34,
**dadurch gekennzeichnet,**
daß jeder Lagerzapfen (30, 31) als Hohlzapfen ausgebildet ist, der einen längsverlaufenden Schlitz (32, 33) enthält, wobei die Schlitze (32, 33) beider Lagerzapfen (30, 31) eines Seitenteils (28) an den einander zugewandten Seiten der Lagerzapfen (30, 31) vorgesehen sind.

36. Abdeckung nach einem der Ansprüche 26 bis 35,
**dadurch gekennzeichnet,**
daß jeder Torsionsstab (24) mit seinem Übergangsabschnitt, der zum angrenzenden U-Schenkel (23) überleitet, im Bereich der Schwenkachse (14) eines Seitenteils (28, 29) durch dessen hohlen Lagerzapfen (30) hindurch geführt ist und der angrenzende U-Schenkel (23) durch den Schlitz (32) aus diesem Lagerzapfen (30) austritt und sich entlang dieses Seitenteiles (28) erstreckt.

37. Abdeckung nach einem der Ansprüche 27 bis 36,
**dadurch gekennzeichnet,**
daß der U-Schenkel (23) mit seinem Ende in den Schlitz (33) des anderen Lagerzapfens (31) dieses Seitenteils (28) eingreift und darin formschlüssig gehalten ist.

38. Abdeckung nach einem der Ansprüche 26 bis 37,
**dadurch gekennzeichnet,**
daß jeder Torsionsstab (24) auf dem Bereich, der sich innerhalb der Längsrinne (25) des Deckels (15) erstreckt, als Halter zum Anklemmen mindestens einer Halteklammer (34), z.B. Kabelhalterung, dient, die mit passenden Schenkeln in den Zwischenraum zwischen der Längsrinne (25) und dem Torsionsstab (24) eingreifen und am Torsionsstab (24) lösbar angreifen kann.

39. Abdeckung nach einem der Ansprüche 1 bis 38,
**dadurch gekennzeichnet,**
daß der Deckel (15) in seiner Schließstellung mittels beidseitiger, am vorderen Längsrand (41) angreifender Verriegelungselemente (36, 37) verriegelbar ist, wobei die Verriegelungselemente (36, 37) jeweils im vorderen Endbereich des jeweiligen Seitenteils (28, 29) gehalten sind.

40. Abdeckung nach Anspruch 39,
**dadurch gekennzeichnet,**
daß jedes Verriegelungselement (36, 37) als gegen Federkraft eindrückbare und unter Federkraft selbsttätig rückstellbare Taste (38) ausgebildet ist, die eine abstehende Sperrnase (39) trägt, die in der Deckelschließstellung einen Vorsprung (40) am Deckel (15) formschlüssig und sperrend übergreift und bei eingedrückter Taste (38) diesen Vorsprung (40) freigibt.

41. Abdeckung nach Anspruch 39 oder 40,
**dadurch gekennzeichnet,**
daß der Deckel (15) als im wesentlichen flache Platte ausgebildet ist, die am vorderen Längsrand einen etwa rechtwinklig nach unten abstehenden Vorderschenkel (41) aufweist, an dem die Sperrnase (39) jedes Verriegelungselements (36, 37) angreifen kann.

42. Abdeckung nach Anspruch 41,
**dadurch gekennzeichnet,**
daß der Vorderschenkel (41) an seiner Unterkante und zumindest im Bereich beider Enden und der jeweiligen Sperrnase (39) des Verriegelungselements (36, 37) einen horizontalen, vom Vorderschenkel (41) weg reichenden Vorsprung (40), insbesondere eine längs durchlaufende Vorsprungleiste, aufweist, die in der Deckelschließstellung von der jeweiligen Sperrnase (39) des Verriegelungselements (36, 37) mit deren Unterseite übergriffen wird.

43. Abdeckung nach Anspruch 41 oder 42,
**dadurch gekennzeichnet,**
daß der Deckel (15) auf seiner Unterseite (16) in Abstand vom Vorderschenkel (41) einen nach unten abstehenden, vorzugsweise längs durchlaufenden, Abtropfschenkel (42) aufweist.

44. Abdeckung nach einem der Ansprüche 1 bis 43,
**dadurch gekennzeichnet,**
daß der Deckel (15) auf seiner Unterseite (16), und hierbei etwa im Mittelbereich, vorzusgweise längs durchlaufende Halterungen aufweist, an denen lösbar Teile (45, 46, 50) anbringbar sind, z.B. Drosselgehäuse (45, 46) der Beleuchtungseinrichtung (17) od.dgl..

45. Abdeckung nach Anspruch 44,
**dadurch gekennzeichnet,**
daß die Halterungen aus zumindest zwei Winkelleisten (43, 44) bestehen, die in Querrichtung in Abstand voneinander verlaufen und mit ihrem horizontalen Unterschenkel (47, 48) einander zugewandt sind.

46. Abdeckung nach einem der Ansprüche 1 bis 45,
**dadurch gekennzeichnet,**
daß der Deckel (15) aus einem Strangpreßteil, vorzugsweise aus Aluminium, gebildet ist.

47. Abdeckung nach einem oder mehreren der vorhergehenden Ansprüche,
**dadurch gekennzeichnet,**
daß die Antriebseinrichtung (18) eine Bremseinrichtung (49) aufweist, mittels der der Deckel (15) im weiter aufgeklappten Zustand zumindest im wesentlichen selbsttätig offengehalten und das Deckelgewicht aufgenommen wird.

48. Abdeckung nach Anspruch 47,
**dadurch gekennzeichnet,**
daß die Bremseinrichtung (49) im Bereich der Schwenkachse (14) des Deckels (15) zwischen diesem und dem jeweiligen Seitenteil (28, 29) angeordnet ist.

49. Abdeckung nach Anspruch 47 oder 48,
**dadurch gekennzeichnet,**
daß die Bremseinrichtung (49) als Reibbremse oder als Verzahnungsbremse mit Verzahnungsrastung ausgebildet ist.

50. Abdeckung nach einem der Ansprüche 47 bis 49,
**dadurch gekennzeichnet,**
daß die Bremseinrichtung (49) auf einer oder jeder Deckelseite und im Bereich des Seitenteils (28, 29) ein Bremsglied (50) aufweist, das auf dem Lagerzapfen (30) des Seitenteils (28) schwenkbar gelagert ist und in Abstand davon formschlüssig am Deckel (15) angreift.

51. Abdeckung nach Anspruch 50,
**dadurch gekennzeichnet,**
daß das Bremsglied (50) einen um die Schwenkachse (14) konzentrisch bewegten Reibkörper (52) und der Seitenteil (28) eine sich entlang der Schwenkbahn des Reibkörpers (52) erstreckende Bremsfläche (53) aufweist, auf die der Reibkörper (52) nach Öffnen des Deckels (15) und Schwenken um einen Anfangsöffnungswinkelbereich aufläuft und auf der der Reibkörper (52) beim weiteren Öffnen des Deckels (15) unter Reibschluß entlangbewegt wird.

52. Abdeckung nach Anspruch 51,
**dadurch gekennzeichnet,**
daß der Reibkörper (52) aus einem elastisch verformbaren Teil, insbesondere Ring, gebildet ist.

53. Abdeckung nach einem der Ansprüche 50 bis 52,
**dadurch gekennzeichnet,**
daß das Bremsglied (50) eine zur Schwenkachse (14) koaxiale Lagerhülse (54) aufweist, mit der das Bremsglied (50) auf dem Lagerzapfen (30) schwenkbar gelagert ist.

54. Abdeckung nach einem der Ansprüche 50 bis 53,
**dadurch gekennzeichnet,**
daß das Bremsglied (50) eine zur Lagerhülse (54) koaxiale Lageraufnahme (55) enthält, die sich zum Inneren des Rahmens (13) hin axial an die Lagerhülse (54) anschließt und in die der jeweilige Endabschnitt des die Längsrinne (25) bildenden Rohrprofils (26) am Deckel (15) axial eingreift.

55. Abdeckung nach einem der Ansprüche 51 bis 54,
**dadurch gekennzeichnet,**
daß der Reibkörper (52), insbesondere der Ring, und die Lagerhülse (54) über die zum Seitenteil (28) weisende Außenseite (56) des Bremsgliedes (50) axial überstehen.

56. Abdeckung nach einem der Ansprüche 50 bis 55,
**dadurch gekennzeichnet,**
daß das Bremsglied (50) in Abstand von der Schwenkachse (14) formschlüssig am Deckel (15), insbesondere an einer Winkelleiste (44) dieses, angreift.

57. Abdeckung nach Anspruch 56,
**dadurch gekennzeichnet,**
daß das Bremsglied (50) am Ende einen Haken (51) aufweist, der in die Winkelleiste (44) eingreift, insbesondere deren Unterschenkel (48) übergreift, und beim Öffnen des Deckels (15) von diesem mitgenommen wird.

58. Abdeckung nach einem der Ansprüche 50 bis 57,
**dadurch gekennzeichnet,**
daß das Bremsglied (50) als einstückiges Kunststoffformteil ausgebildet ist.

59. Abdeckung nach einem der Ansprüche 1 bis 58,
**dadurch gekennzeichnet,**
daß die Seitenteile (28, 29) etwa doppelt so hoch wie die Profilleisten (57, 58) ausgebildet sind und über den Oberrand der Profilleisten (57, 58) mit ihrer etwa halben Höhe überstehen.

60. Abdeckung nach einem der Ansprüche 41 bis 59,
**dadurch gekennzeichnet,**
daß der Vorderschenkel (41) des Deckels (15) eine etwa der halben Höhe der Seitenteile (28, 29) entsprechende Höhe aufweist und bei geschlossenem Deckel (15) mit seiner Unterkante etwa auf der Oberseite der vorderen Profilleiste (57) aufliegt, während der Deckel (15) mit beiden quer verlaufenden Seitenrändern etwa zwischen den Seitenteilen (28, 29) aufgenommen wird.

61. Abdeckung nach einem der Ansprüche 1 bis 60,
**dadurch gekennzeichnet,**
daß die Profilleisten (57, 58) im Querschnitt etwa zwei übereinander stehende und im Bereich der Höhenmitte vereinigte 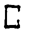 -Profile (59, 60) aufweisen, wobei sich an das obere 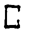 -Profil (59) innenseitig ein T-Profil (61) anschließt.

62. Abdeckung nach einem der Ansprüche 1 bis 61,
**dadurch gekennzeichnet,**
daß die Profilleisten (57, 58) am unteren Rand eine Rinne (62) aufweisen, in die eine an jedem Seitenteil (28, 29) angeformte und überstehende Nase (63) etwa formschlüssig eingreift.

63. Abdeckung nach einem der Ansprüche 1 bis 62,
**dadurch gekennzeichnet,**
daR die Profilleisten (57, 58) in Abstand oberhalb des unteren Randes auf der Innenseite eine etwa rinnenförmige Aufnahme (64) aufweisen, in die eine in jedem Seitenteil (28, 29) gehaltene Befestigungsschraube (65) eingreifen kann.

64. Abdeckung nach Anspruch 1,
**dadurch gekennzeichnet,**
daß der Winkelschenkel einen nach unten gerichteten Schenkelabschnitt (68) in Verlängerung des hochstehenden Schenkkels (67) aufweist, der die Wandung (12) des Aquariums (10), Terrariums od.dgl., auf dessen Oberrand der Rahmen (13) aufgesetzt ist, innenseitig übergreift, wobei die Wandung (12) zwischen diesem innen übergreifenden Schenkelabschnitt (68) und den übrigen, nach innen abstehenden Schenkelteilen (70, 71) der Profilleisten (57, 58) aufgenommen ist und der Rahmen (13) mit dem horizontalen Schenkel (66) des nach innen vorspringenden Winkelschenkels auf der oberen Schmalfläche der Wandung (12) aufsitzt.

65. Abdeckung nach einem der Ansprüche 1 bis 64,
**dadurch gekennzeichnet,**
daß an jedem Seitenteil (28, 29) in Abstand oberhalb der Nase (63) eine nach innen vorspringende Lasche (69) angeformt ist, die in den Endbereich rückseitig der Profilleisten (57, 58) und unterhalb des horizontalen Schenkels (66) des Winkelschenkels dieser eingreift.

66. Abdeckung nach einem der Ansprüche 1 bis 65,
**dadurch gekennzeichnet,**
daß die Profilleisten (57, 58) im Bereich des Oberrandes und des Unterrandes nach innen gerichtete 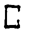 -Schenkel (70, 71) aufweisen und von außen her von Haltelementen (72), z.B. Kabelhalteklammern, die z.B. einen etwa C-förmigen Klammerteil (73) aufweisen, umklammerbar sind.

67. Abdeckung nach einem der Ansprüche 44 bis 66,
**dadurch gekennzeichnet,**
daß die Drosselgehäuse (45, 46) der Beleuchtungseinrichtung (17) zwischen den beiden unterseitigen Winkelleisten (43, 44) des Deckels (15) z.B. lösbar aufgenommen und gehalten sind.

68. Abdeckung nach einem der Ansprüche 44 bis 67,
**dadurch gekennzeichnet,**
daß jedes Drosselgehäuse (45, 46) auf jeder Gehäuseseite ein oder vorzugsweise mehrere in Abstand angeordnete Schnapphaken (74) aufweist, die mit ihrem Hakenteil den Unterschenkel (47, 48) der Winkelleiste (43, 44) übergreifen.

69. Abdeckung nach einem der Ansprüche 44 bis 68,
**dadurch gekennzeichnet,**
daß jedes Drosselgehäuse (45, 46) auf jeder Gehäuseseite ein oder vorzugsweise mehrere hochstehende Laschen (75) aufweist, die als Führungslaschen, Paßlaschen od.dgl. dienen und mit ihrer Außenseite an der nach innen gerichteten Kante des Unterschenkels (47, 48) der jeweiligen Winkelleiste (43, 44) anliegen können.

70. Abdeckung nach einem der Ansprüche 44 bis 69,
**dadurch gekennzeichnet,**
daß jedes Drosselgehäuse (45, 46) auf jeder Gehäuseseite zwei in Abstand voneinander befindliche Befestigungsaufnahmen für eine Fassung (76, 77) aufweist.

71. Abdeckung nach Anspruch 70,
**dadurch gekennzeichnet,**
daß die jeweilige gewünschte Befestigungsaufnahme je Gehäuseseite bei der Herstellung des Drosselgehäuses (45, 46) gewählt und vorgegeben wird und das Drosselgehäuse (45, 46) vorzugsweise aus Kunststoff gebildet ist.

## Claims

1. Cover for aquaria, terraria or the like with an approximately rectangular frame (13) and a flap up lid (15) mounted on the frame (13) about a pivot axis (14), with a lighting device (17) secured to the under side (16) of the lid, whereby the lid (15) extends over most of the transverse depth of the frame (13), **characterised in that** the two parts of the frame (13) running in longitudinal direction are formed by identical front and rear profiled strips (57, 58), which extend between two transverse side parts (28, 29) of the frame (13) and are overlapped at the ends by the latter, in that at least the rear profiled strip (58) with its upper side forms a support surface for components or the like, and has an inwardly projecting angled arm with a horizontal arm (66), the upright arm (67) of which acts as a support arm and/or bearing mount for the component or the like, and in that the rear region remaining in connection with the lid (15) and reaching as far as the rear profiled strip (58) can be occupied by the individual optional components or the like, which extend on the one hand up to the rear edge of the lid (15) and on the other hand are detachably mounted on the rear profiled strip (58).

2. Cover according to Claim 1, **characterised in that** the profiled strips (57, 58) are formed from aluminium-extruded parts.

3. Cover according to Claim 1 or 2, **characterised in that** the inwardly projecting angled arm with a horizontal arm (66) is provided approximately at the height of the first quarter of the total height of the profiled strips (57, 58).

4. Cover according to one of Claims 1 to 3, **characterised in that** the components or the like comprise individual modules (80).

5. Cover according to Claim 4, **characterised in that** cover modules (81) are provided as the individual modules (80) which have an upper covering lid part (82).

6. Cover according to Claim 4, **characterised in that** a holding plate (86) with an upper suspension hook (87) is provided as the individual module (80), by means of which the latter can be suspended on the outside or preferably on the inside of the rear profiled strip (58), in particular on the upright arm (67) of the latter, and in that the holding plate (86) has holding facilities (88), e.g. openings, for attaching a component (89), e.g. an inside filter for an aquarium.

7. Cover according to Claim 6, **characterised in that** the holding plate (86) has an upper projective cover (90).

8. Cover according to Claim 6 or 7, **characterised in that** the inserted holding plate (86) can be covered at the top by means of a cover module (81).

9. Cover according to Claim 4, **characterised in that** a box module (91) with holding plate (93) and holding facilities (94), e.g. openings, for mounting tubes and/or hose parts, e.g. for the connection of an outside filter for an aquarium is provided as an individual module (80).

10. Cover according to Claim 9, **characterised in that** the box module (91) can be covered at the top by means of a cover module (81).

11. Cover according to Claim 4, **characterised in that** a technical module (95, 95a, 95b), which has an upright, preferably desk-like oblique front side (96, 96a), is provided as an individual module (80).

12. Cover according to Claim 11, **characterised in that** the technical module (95) is designed as a switch module which comprises an electrical switch with a cable and plug-and-socket connection in a dosed housing, the control button (97) of which is arranged on the front side (96) and can be activated from the outside.

13. Cover according to Claim 11, **characterised in that** a clock module with a timer is provided as technical module (95a).

14. Cover according to Claim 12 or 13, **characterised in that** the front side (96) of the technical module (95) bearing the switch, in particular the switch module, is detachable and can be replaced by a front panel (96a) which has a clock with a timer, whereby the electrical disconnection or connection in the region of the plug-and socket connection is performed by removing the plug of one and inserting the plug of the other.

15. Cover according to one of Claims 11 to 14, **characterised in that** a heating module is provided as technical module (95b), which comprises a heating element reaching into the aquarium (10), an operable temperature regulator (98) and a temperature display (99).

16. Cover according to one of Claims 11 to 15, **characterised in that** a pH-value control module or a water level control module or a water conductance detecting module or a luminosity-monitoring module or similar module is provided as a technical module.

17. Cover according to one of Claims 4 to 16, **characterised in that** the individual module (80) preferably comprises on both sides a vertical slot (83) open to the base in the side `wall and is thus able to be fitted onto the upright arm (67) of the rear profiled strip (58).

18. Cover according to Claim 17, **characterised in that** the individual module (80) can be supported on the upright arm (67) of the rear profiled strip (58).

19. Cover according to one of Claims 4 to 18, **characterised in that** the individual module (80), preferably on both sides, sits with the lower edge (85) of wall parts on the upper side of the rear profiled strip (58).

20. Cover according to one of Claims 4 to 19, **characterised in that** the individual module (80) can be supported on the adjacent rear edge of the lid (15).

21. Cover according to one of Claims 4 to 20, **characterised in that** the individual module (80), in particular the technical module (95, 95a, 95b) and/or cover module (81), has a rear box part (84) projecting over the rear profiled strip (58) and open at the bottom, through which cables, hoses or the like can be guided to the outside.

22. Cover according to one or more of the preceding Claims, **characterised by a** driving mechanism (18) acting on the lid (15), which can be activated to open the lid (15), by means of which the lid (15) can be lifted up automatically at least by an initial opening angle.

23. Cover according to Claim 22, **characterised in that** the driving mechanism (18) has a drive store (19) which can be released on releasing the lid (15) in the opening direction for the drive and can be charged by closing the lid (15), e.g. a clock-spring motor or similar spring drive.

24. Cover according to Claim 22 or 23, **characterised in that** the driving mechanism (18) comprises a spring element (20) acting on the lid (15) which on locking the lid (15) is loaded more strongly and on unlocking the dosed lid (15) loads the latter in opening direction with elastic force, and preferably in that the spring element (20) is of such a size that it holds the lid (15) open automatically in the further lifted position and bears the lid weight.

25. Cover according to Claim 24, **characterised in that** the spring element (20) comprises at least one torsion spring (21).

26. Cover according to Claim 24 or 25, **characterised in that** the spring element (20) comprises at least one section (22) acting on the lid (15), preferably from inside, and loading the latter and at least one section (23) secured to the frame (13) which are both connected by at least one torsion bar (24).

27. Cover according to one of Claims 24 to 26, **characterised in that** the spring element (20) is roughly the shape of a lying down U, whereby each arm of the U is secured to the frame (13), whilst the base part joining the two arms (23) has a roughly loop-shaped bent section (22), whereby the loop-shaped section (22) forms the section bearing on the lid (15) and the two bar parts running therefrom on both sides and up to the U-arms (23) form respectively a torsion bar (24), and in that the loop-shaped section (22) in the non-preloaded state of the spring element (20) is at an angle of about 90° or more relative to the plane in which the two arms (23) and the torsion bars (24) extend.

28. Cover according to Claim 26 or 27, **characterised in that** each torsion bar (24) runs approximately coaxially to the pivot axis (14) of the lid (15).

29. Cover according to one of Claims 26 to 28, **characterised in that** each torsion bar (24) runs inside an inner-side, preferably formed on longitudinal channel (25) of the lid.

30. Cover according to one of Claims 1 to 29, **characterised in that** the two transverse side parts (28, 29) of the frame (13) are identical to one another and one part is arranged relative to the other with its inside pivoted about a perpendicular axis of 180°.

31. Cover according to Claim 30, **characterised in that** the side parts (28, 29) are designed as injection moulded parts preferably as box sections open inside and at the base.

32. Cover according to one of Claims 1 to 31, **characterised in that** each side part (28, 29) has an inwardly projecting pivot pin (30, 31) at an equal distance from the end, the rear one of which acts as a pivot pin for the lid (15).

33. Cover according to Claim 32, **characterised in that** the respective pivot pin (30) engages with the longitudinal channel (25) preferably formed onto the lid (15).

34. Cover according to one of Claims 29 to 33, **characterised in that** the longitudinal channel (25) on the lid (15) is formed by a tube profile (26) extending in cross section at least over a circular section which tube profile has a longitudinal through slot (27).

35. Cover according to one of Claims 32 to 34, **characterised in that** each pivot pin (30, 31) is designed as a hollow pin with a longitudinal slot (32, 33), whereby the slots (32, 33) of both pivot pins (30, 31) of one side part (28) are provided on the facing sides of the pivot pins (30, 31).

36. Cover according to one of Claims 26 to 35, **characterised in that** each torsion bar (24) with its transition section which passes into the adjoining U-arm (23), is guided in the region of the pivot axis (14) of a side part (28, 29) through its hollow pivot pins (30) and the adjoining U-arm (23) exits through the slot (32) from said pivot pin (30) and extends along said side part (28).

37. Cover according to one of Claims 27 to 36, **characterised in that** the U-arm (23) engages at one end in the slot (33) of the other pivot pin (31) of said side part (28) and is held therein in a positive manner.

38. Cover according to one of Claims 26 to 37, **characterised in that** each torsion bar (24) on the region which extends inside the longitudinal channel (25) of the lid (15) acts as a holder for clamping at least one holding clamp (34), e.g. a cable support, `which with fitting arms can engage in the intermediate space between the longitudinal channel (25) and the torsion bar (24) and can grip detachably on the torsion bar (24).

39. Cover according to one of Claims 1 to 38, **characterised in that** the lid (15) can be locked in its closed position by means of locking elements (36, 37) on both sides engaging on the front longitudinal edge (41), whereby the locking elements (36, 37) are held respectively in the front end region of the respective side part (28, 29).

40. Cover according to Claim 39, **characterised in that** each locking element (36, 37) is designed as a key (38) which can be pressed against elastic force and automatically restored by elastic force, which has a projecting locking nose (39) which in the dosed position of the lid overlaps positively and lockingly a projection (40) on the lid (15) and with a pressed key (38) releases said projection (40).

41. Cover according to Claim 39 or 40, **characterised in that** the lid (15) is designed as an essentially flat plate which on the front longitudinal edge has a front arm (41) projecting at right angles downwards on which the locking nose (39) of each locking element (36, 37) can grip.

42. Cover according to Claim 41, **characterised in that** the front arm (41) on its lower edge and at least in the region of both ends and the respective locking nose (39) of the locking element (36, 37) has a horizontal projection (40) extending away from the front arm (41), in particular a longitudinal projection strip, `which in the dosed position of the lid is overlapped by the respective locking nose (39) of the locking element (36, 37) with its underside.

43. Cover according to Claim 41 or 42, **characterised in that** the lid (15) on its underside (16) comprises at a distance from the front arm (41) a downwards projecting, preferably longitudinal draining arm (42).

44. Cover according to one of Claims 1 to 43, **characterised in that** the lid (15) on its under side (16) roughly in the centre has preferably longitudinal holders onto which parts (45, 46, 50) can be attached detachably, e.g. inductor housings (45, 46) of the lighting device (17) or the like.

45. Cover according to Claim 44, **characterised in that** the holders comprises at least two angled strips (43, 44) which are spaced apart from one another in transverse direction and face one another with their horizontal lower arm (47, 48).

46. Cover according to one of Claims 1 to 45, **characterised in that** the lid (15) is formed by an extruded part, preferably made of aluminium.

47. Cover according to one or more of the preceding Claims, **characterised in that** the drive mechanism (18) comprises a brake device (49), by means of which the lid (15) in further lifted up position is held open at least essentially automatically and the weight of the lid is borne.

48. Cover according to Claim 47, **characterised in that** the brake device (49) in the region of the pivot axis (14) of the lid (15) is arranged between the latter and the respective side part (28, 29).

49. Cover according to Claim 47 or 48, **characterised in that** the brake device (49) is designed as a friction brake or as a tooth brake with a tooth mechanism.

50. Cover according to one of Claims 47 to 49, **characterised in that** the brake device (49) on one or each lid side and in the region of the side part (28, 29) has a brake element (50) which is pivotably mounted on the pivot pin (30) of the side part (28) and at a distance therefrom engages positively with the lid (15).

51. Cover according to Claims 50, **characterised in that** the brake element (50) comprises a friction body (52) moved concentrically about the pivot axis (14) and the side part (28) has a braking surface (53) extending along the pivotal path of the friction body (52), onto which the friction body (52) leads after opening the lid (15) and pivoting about an initial opening angle and on which the friction body (52) is moved along under frictional grip when the lid (15) is opened further.

52. Cover according to Claim 51, **characterised in that** the friction body (52) is formed from an elastically deformable part, in particular a ring.

53. Cover according to one of Claims 50 to 52, **characterised in that** the brake element (50) comprises a bearing sleeve (54) that is coaxial relative to the pivot axis (14) with which the brake element (50) is pivotably mounted on the pivot pin (30).

54. Cover according to one of Claims 50 to 53, **characterised in that** the brake element (50) comprises a bearing mount (55) that is coaxial relative to the bearing sleeve (54), which towards the inside of the frame (13) joins the bearing sleeve (54) axially, and in which the respective end section of the tube profile (26) on the lid (15) forming the longitudinal channel (25) axially engages.

55. Cover according to one of Claims 51 to 54, **characterised in that** the friction body (52), in particular the ring, and the bearing sleeve (54) project axially over the outside (56) of the brake element (50) pointing to the side part (28).

56. Cover according to one of Claims 50 to 55, **characterised in that** the brake element (50) at a distance from the pivot axis (14) engages positively on the lid (15), in particular on an angled strip (44) thereof.

57. Cover according to Claim 56, **characterised in that** the brake element (50) has a hook (51) at the end which engages in the angled strip (44), in particular its lower arm (48) and on opening the lid (15) is carried by the latter.

58. Cover according to one of Claims 50 to 57, **characterised in that** the brake element (50) is designed as a one piece plastic moulded part.

59. Cover according to one of Claims 1 to 58, **characterised in that** the side parts (28, 29) are designed to be about twice as high as the profiled strips (57, 58) and project over the upper edge of the profiled strips (57, 58) by about half their height.

60. Cover according to one of Claims 41 to 59, **characterised in that** the front arm (41) of the lid (15) is approximately half as high as the side parts (28, 29) and with a dosed lid (15) rests with its lower edge on the upper side of the front profiled strip (57), whilst the lid (15) with both transverse side edges is mounted between the side parts (28, 29).

61. Cover according to one of Claims 1 to 60, **characterised in that** the profiled strips (57, 58) in cross section have two [-profiles (59, 60) on top of one another that are joined in the middle, whereby a T-profile (61) joins the upper [-profile (59) on the inside.

62. Cover according to one of Claims 1 to 61, **characterised in that** the profiled strips (57, 58) have a channel (62) on the lower edge in which a projecting nose (63) formed on each side part (28, 29) engages almost positively.

63. Cover according to one of Claims 1 to 62, **characterised in that** the profiled strips (57, 58) at a distance above the lower edge on the inside has a roughly channel-shaped mount (64), in which a fastening screw (65) held in each side part (28, 29) can engage.

64. Cover according to Claims 1, **characterised in that** the angled arm has a downwards pointing arm section (68) in extension of the upright arm (67) which overlaps on the inside the wall (12) of the aquarium (10), terrarium or the like, on the upper edge of which the frame (13) is fitted, whereby the well (12) is held between the inside overlapping arm section (68) and the other inwards protruding arm parts (70, 71) of the profiled strips (57, 58), and the frame (13) with the horizontal arm (66) of the inwards projecting angled arm sits on the upper narrow surface of the wall (12).

65. Cover according to one of Claims 1 to 64, **characterised in that** on each side part (28, 29) at a distance above the nose (63) an inwardly projecting plate (69) is formed which engages in the end region to the rear of the profiled strips (57, 58) and underneath the horizontal arm (66) of the angled arm thereof.

66. Cover according to one of Claims 1 to 65, **characterised in that** the profiled strips (57, 58) in the region of the upper edge and the lower edge have inwardly pointing [-arms (70, 71) and can be clamped from the outside by holding elements (72), e.g. cable clamps, which e.g. have a C-shaped clamp part (73).

67. Cover according to one of Claims 44 to 66, **characterised in that** the inductor housings (45, 46) of the lighting device (17) are mounted and held e.g. detachably between the two lower side angled strips (43, 44) of the lid (15).

68. Cover according to one of Claims 44 to 67, **characterised in that** each inductor housing (45, 46) on each housing side has one or preferably several snap hooks (74) arranged at a distance from one another which with their hook part overlap the lower arm (47, 48) of the angled strip (43, 44).

69. Cover according to one of Claims 44 to 68, **characterised in that** each inductor housing (45, 46) on each housing side has one or preferably several upright tabs (75) which serve as guide tabs, fitting tabs or the like, and with their exterior can rest on the inwards pointing edge of the lower arm (47, 48) of the respective angled strip (43, 44).

70. Cover according to one of Claims 44 to 69, **characterised in that** each inductor housing (45, 46) on each housing side has two spaced apart fastening mounts for a mounting (76, 77).

71. Cover according to Claims 70, **characterised in that** the respective desired fastening mount for each housing side is selected on the production of the inductor housing (45, 46) and is prescribed and the inductor housing (45, 46) is preferably made of plastic.

## Revendications

1. Couverture pour aquariums, terrariums ou dispositifs semblables, comportant un cadre à peu près rectangulaire (13) et un couvercle relevable (15) monté sur ce cadre (13) autour d'un axe de basculement (14) et sur la face inférieure (16) duquel est monté un dispositif d'éclairage (17), le couvercle (15) s'étendant sur une partie importante de la profondeur du cadre (13) mesurée dans la direction transversale, caractérisée par le fait que les deux parties s'étendant longitudinalement du cadre (13) sont formées de baguettes profilées avant et arrière identiques (57, 58) qui s'étendent entre deux parties latérales s'étendant transversalement (28, 29) du cadre (13) et sont coiffées à leurs extrémités par celles-ci, qu'au moins la face supérieure de la baguette profilée arrière (58) forme une surface d'appui pour des éléments et cette baguette (58) présente une aile en équerre saillant vers l'intérieur ayant une aile horizontale (66) et dont l'aile montante (67) sert d'aile d'appui et/ou de support d'accrochage pour les éléments, et que la partie arrière restant après le couvercle (15) et allant jusqu'à la baguette profilée arrière (58) peut être garnie des éléments individuels, pouvant être placés au choix, qui d'une part vont jusqu'au bord arrière du couvercle (15) et d'autre part peuvent être montés de manière amovible sur la baguette profilée arrière (58).

2. Couverture selon la revendication 1, caractérisée par le fait que les baguettes profilées (57, 58) sont formées de profilés extrudés en aluminium.

3. Couverture selon l'une des revendications 1 et 2, caractérisée par le fait que l'aile en équerre saillant vers l'intérieur et ayant une aile horizontale (66) est prévue à peu près au niveau du premier quart de la hauteur totale des baguettes profilées (57, 58).

4. Couverture selon l'une des revendications 1 à 3, caractérisée par le fait que les éléments sont constitués de modules individuels (80).

5. Couverture selon la revendication 4, caractérisée par le fait que comme modules individuels (80) sont prévus des modules de couverture (81) qui présentent une partie couvercle couvrante supérieure (82).

6. Couverture selon la revendication 4, caractérisée par le fait que comme module individuel (80) est prévue une plaque support (86) ayant des crochets supérieurs (87) qui permettent de l'accrocher du côté extérieur ou de préférence du côté intérieur sur la baguette profilée arrière (58), en particulier sur l'aile montante (67) de celle-ci, et que cette plaque support (86) présente des dispositifs de support (88), par exemple des ouvertures, pour le montage sur elle d'un élément (89), par exemple d'un filtre intérieur d'aquarium.

7. Couverture selon la revendication 6, caractérisée par le fait que la plaque support (86) présente un auvent (90) sur son côté supérieur.

8. Couverture selon l'une des revendications 6 et 7, caractérisée par le fait que la plaque support (86) accrochée peut être couverte sur son côté supérieur au moyen d'un module de couverture (81).

9. Couverture selon la revendication 4, caractérisée par le fait que comme module individuel (80) est prévu un module à boîte (91) ayant une plaque support (93) et des dispositifs de support (94), par exemple des ouvertures, faits dans celle-ci pour recevoir des morceaux de tuyau rigide et/ou des morceaux de tuyau souple par exemple pour le raccordement d'un filtre extérieur d'aquarium.

10. Couverture selon la revendication 9, caractérisée par le fait que le module à boîte (91) peut être couvert sur son côté supérieur au moyen d'un module de couverture (81).

11. Couverture selon la revendication 4, caractérisée par le fait que comme module individuel (80) est prévu un module technique (95, 95a, 95b) qui présente une face avant montante (96, 96a) s'étendant de préférence obliquement à peu près à la manière d'un pupitre.

12. Couverture selon la revendication 11, caractérisée par le fait que le module technique (95) est un module à interrupteur qui contient un interrupteur électrique avec câble et dispositif de connexion dans un boîtier fermé, dont le bouton de commande (97) est placé dans la zone de la face avant (96) et peut être actionné de l'extérieur.

13. Couverture selon la revendication 11, caractérisée par le fait que comme module technique (95a) est prévu un module à horloge pourvu d'une minuterie.

14. Couverture selon l'une des revendications 12 et 13, caractérisée par le fait que la face avant (96) portant l'interrupteur du module technique (95), en particulier du module à interrupteur, est amovible et peut être remplacée par une paroi avant (96a) qui présente une horloge avec minuterie, la séparation et la liaison électriques se faisant dans la zone du dispositif de connexion par retrait de la fiche de l'un et enfichage de la fiche de l'autre.

15. Couverture selon l'une des revendications 11 à 14, caractérisée par le fait que comme module technique (95b) est prévu un module de chauffage qui présente un élément chauffant entrant dans l'aquarium (11), un régulateur de température réglable (98) et un indicateur de température (99).

16. Couverture selon l'une des revendications 11 à 15, caractérisée par le fait que comme module technique est prévu un module de régulation de pH ou un module de régulation de niveau d'eau ou un module de mesure de la conductance de l'eau ou un module de contrôle de l'intensité lumineuse ou un module semblable.

17. Couverture selon l'une des revendications 4 à 16, caractérisée par le fait que le module individuel (80) présente de préférence des deux côtés dans sa partie de paroi latérale une fente verticale débouchant en bas (83) et peut être monté par celle-ci sur l'aile montante (67) de la baguette profilée arrière (58).

18. Couverture selon la revendication 17, caractérisée par le fait que le module individuel (80) peut être supporté par l'aile montante (67) de la baguette profilée arrière (58).

19. Couverture selon l'une des revendications 4 à 18, caractérisée par le fait que le module individuel (80) repose de préférence des deux côtés par le bord inférieur (85) de parties de paroi sur la face supérieure de la baguette profilée arrière (58).

20. Couverture selon l'une des revendications 4 à 19, caractérisée par le fait que le module individuel (80) peut être supporté par le bord arrière contigu du couvercle (15).

21. Couverture selon l'une des revendications 4 à 20, caractérisée par le fait que le module individuel (80), en particulier le module technique (95, 95a, 95b) et/ou le module de couverture (81), présente une partie boîte arrière (84) dépassant de la baguette profilée arrière (58) et ouverte en bas par laquelle peuvent passer vers l'extérieur des câbles, des tuyaux souples ou des éléments semblables.

22. Couverture selon une ou plusieurs des revendications précédentes, caractérisée par un dispositif moteur (18) actionnable pour l'ouverture du couvercle (15), attaquant celui-ci et permettent d'ouvrir automatiquement celui-ci au moins sur un domaine angulaire d'ouverture initiale.

23. Couverture selon la revendication 22, caractérisée par le fait que le dispositif moteur (18) présente un accumulateur moteur (19), par exemple un moteur à ressort ou un élément moteur à ressort semblable, qui peut être libéré lors de la libération du couvercle (15) dans le sens d'ouverture pour mouvoir celui-ci et être chargé par fermeture du couvercle (15).

24. Couverture selon l'une des revendications 22 et 23, caractérisée par le fait que le dispositif moteur (18) présente un élément élastique (20) qui attaque le couvercle (15), devient davantage contraint lors de la fermeture du couvercle (15) et, lors du déverrouillage du couvercle (15) fermé, sollicite celui-ci dans le sens d'ouverture avec une force élastique, et de préférence que cet élément élastique (20) est dimensionné de façon telle qu'il maintienne au moins à peu près automatiquement le couvercle (15) ouvert à l'état davantage ouvert et absorbe le poids de celui-ci.

25. Couverture selon la revendication 24, caractérisée par le fait que l'élément élastique (20) présente au moins un ressort de torsion (21).

26. Couverture selon l'une des revendications 24 et 25, caractérisée par le fait que l'élément élastique (20) présente au moins une partie (22) appuyée de préférence de l'intérieur sur le couvercle (15) et sollicitant celui-ci et au moins une partie (23) fixée au cadre (13) qui sont reliées par au moins une barre de torsion (24).

27. Couverture selon l'une des revendications 24 à 26, caractérisée par le fait que l'élément élastique (20) a à peu près la forme d'un U couché, chaque branche du U étant fixée au cadre (13), tandis que la partie de base reliant les deux branches (23) présente une partie courbée vers le haut à peu près en forme de boucle (22), cette partie (22) formant la partie appuyée sur le couvercle (15), et les parties de barre partant des deux côtés de celle-ci et s'étendant jusqu'aux branches (23) du U formant chacune une barre de torsion (24), et que la partie à peu près en forme de boucle (22), lorsque l'élément élastique (20) n'est pas précontraint, fait un angle d'environ 90° ou plus avec le plan qui contient les deux branches (23) et les barres de torsion (24).

28. Couverture selon l'une des revendications 26 et 27, caractérisée par le fait que chaque barre de torsion (24) est à peu près axée sur l'axe de basculement (14) du couvercle (15).

29. Couverture selon l'une des revendications 26 à 28, caractérisée par le fait que chaque barre de torsion (24) s'étend dans une gouttière longitudinale intérieure (25) du couvercle (15) de préférence faisant corps avec celui-ci.

30. Couverture selon l'une des revendications 1 à 29, caractérisée par le fait que les deux parties latérales s'étendant transversalement (28, 29) du cadre (13) sont identiques et la face intérieure de l'une est tournée de 180° autour d'un axe vertical par rapport à celle de l'autre.

31. Couverture selon la revendication 30, caractérisée par le fait que les parties latérales (28, 29) sont constituées de pièces injectées en plastique et de préférence de profilés caissons ouverts vers l'intérieur et le bas.

32. Couverture selon l'une des revendications 1 à 31, caractérisée par le fait que chaque partie latérale (28, 29) présente à la même distance de ses extrémités des tourillons saillant vers l'intérieur (30, 31), le tourillon arrière servant de tourillon pour le couvercle (15).

33. Couverture selon la revendication 32, caractérisée par le fait que le tourillon (30) s'engage dans la gouttière longitudinale (15) de préférence faisant corps avec le couvercle (15).

34. Couverture selon l'une des revendications 29 à 33, caractérisée par le fait que la gouttière longitudinale (25) prévue sur le couvercle (15) est formée par un profilé tubulaire (26) dont la section s'étend au moins sur un arc de cercle et qui présente une fente (27) s'étendant longitudinalement sur toute la longueur du couvercle.

35. Couverture selon l'une des revendications 32 à 34, caractérisée par le fait que chaque tourillon (30, 31) est un tourillon creux qui présente une fente s'étendant longitudinalement (32, 33), les fentes (32, 33) des deux tourillons (30, 31) d'une partie latérale (28) étant prévues sur les côtés en regard des tourillons (30, 31).

36. Couverture selon l'une des revendications 26 à 35, caractérisée par le fait que la partie de raccordement de chaque barre de torsion (24) qui va à la branche contigue (23) du U passe, dans la zone de l'axe de basculement (14) d'une partie latérale (28, 29), dans le tourillon creux (30) de celle-ci et la branche contigue (23) du U sort de ce tourillon (30) par la fente (32) et s'étend le long de cette partie latérale (28).

37. Couverture selon l'une des revendications 27 à 36, caractérisée par le fait que l'extrémité de la branche (23) du U s'engage dans la fente (33) de l'autre tourillon (31) de cette partie latérale (28) et y est tenue par emboîtement.

38. Couverture selon l'une des revendications 26 à 37, caractérisée par le fait que chaque barre de torsion (24), dans la zone qui s'étend dans la gouttière longitudinale (25) du couvercle (15), sert de support pour l'attache d'au moins une pince support (45), par exemple d'un support de câble, laquelle peut s'engager par des branches adaptées dans l'intervalle entre la gouttière longitudinale (25) et la barre de torsion (24) et attaquer de manière séparable la barre de torsion (24).

39. Couverture selon l'une des revendications 1 à 38, caractérisée par le fait que le couvercle (15), en position fermée, peut être verrouillé au moyen d'éléments de verrouillage prévus des deux côtés (36, 37) qui attaquent le bord longitudinal avant (41), ces éléments de verrouillage (36, 37) étant montés chacun dans la partie d'extrémité avant d'une partie latérale (28, 29).

40. Couverture selon la revendication 39, caractérisée par le fait que chaque élément de verrouillage (36, 37) est constitué d'une touche (38) qui peut être enfoncée contre une force élastique et rappelée automatiquement par une force élastique et porte un ergot d'arrêt saillant (39) qui, lorsque le couvercle (15) est fermé, est appliqué avec production d'arrêt sur une saillie (40) de celui-ci et, lorsque la touche (38) est enfoncée, libère cette saillie (40).

41. Couverture selon l'une des revendications 39 et 40, caractérisée par le fait que le couvercle (15) est constitué d'une plaque sensiblement plate qui présente sur son bord longitudinal avant une aile avant (41) dirigée à peu près à angle droit vers le bas qui peut être attaquée par l'ergot d'arrêt (39) de chaque élément de verrouillage (36, 37).

42. Couverture selon la revendication 41, caractérisée par le fait que l'aile avant (41) présente sur son bord inférieur et au moins dans la zone des deux extrémités et de l'ergot d'arrêt (39) de l'élément de verrouillage (36, 37) une saillie horizontale (40) s'éloignant de l'aile avant (41), en particulier une baguette saillante s'étendant longitudinalement sur toute la longueur du couvercle sur laquelle s'applique, lorsque le couvercle est fermé, le côté inférieur de l'ergot d'arrêt (39) de l'élément de verrouillage (36, 37).

43. Couverture selon l'une des revendications 41 et 42, caractérisée par le fait que le couvercle (15) présente sur sa face inférieure (16), à une certaine distance de l'aile avant (41), une aile d'égouttement (42) dirigée vers le bas et s'étendant longitudinalement de préférence sur toute la longueur du couvercle.

44. Couverture selon l'une des revendications 1 à 43, caractérisée par le fait que le couvercle (15) présente sur sa face inférieure (16), à peu près dans sa partie centrale, des supports s'étendant longitudinalement de préférence sur toute sa longueur sur lesquels des éléments (45, 46, 50), par exemple des boîtes à inductance (45, 46) du dispositif d'éclairage (17) ou des éléments semblables, peuvent être montés de manière amovible.

45. Couverture selon la revendication 44, caractérisée par le fait que les supports sont constitués d'au moins deux baguettes en équerre (43, 44) espacées dans la direction transversale et dont les ailes inférieures horizontales (47, 48) sont dirigées l'une vers l'autre.

46. Couverture selon l'une des revendications 1 à 45, caractérisée par le fait que le couvercle (15) est formé d'une pièce extrudée de préférence en aluminium.

47. Couverture selon une ou plusieurs des revendications précédentes, caractérisée par le fait que le dispositif moteur (18) présente un dispositif de freinage (49) qui maintient au moins à peu près automatiquement le couvercle ouvert à l'état davantage ouvert et absorbe le poids de celui-ci.

48. Couverture selon la revendication 47, caractérisée par le fait que le dispositif de freinage (49) est placé dans la zone de l'axe de basculement (14) du couvercle (15) entre ce dernier et la partie latérale (28, 29).

49. Couverture selon l'une des revendications 47 et 48, caractérisée par le fait que le dispositif de freinage (49) est constitué d'un frein à friction ou d'un frein à dentures à encliquetage de dentures.

50. Couverture selon l'une des revendications 47 à 49, caractérisée par le fait que le dispositif de freinage (49) présente sur un côté ou chaque côté du couvercle et dans la zone de la partie latérale (28, 29) un organe de freinage (50) qui est monté basculant sur le tourillon (30) de la partie latérale (28) et attaque à distance de celui-ci le couvercle (15).

51. Couverture selon la revendication 50, caractérisée par le fait que l'organe de freinage (50) présente un corps de friction (52) mû autour de l'axe de basculement (14) et la partie latérale (28) présente une surface de freinage (53) qui s'étend le long de la trajectoire de basculement du corps de friction (52) et est abordée par le corps de friction (52) après ouverture du couvercle (15) et basculement de celui-ci d'un domaine angulaire d'ouverture initiale et le long de laquelle le corps de friction (52) se déplace avec friction lors de la suite de l'ouverture du couvercle (15).

52. Couverture selon la revendication 51, caractérisée par le fait que le corps de friction (52) est formé d'un élément, en particulier d'un anneau, déformable élastiquement.

53. Couverture selon l'une des revendications 50 à 52, caractérisée par le fait que l'organe de freinage (50) présente un coussinet (54) axé sur l'axe de basculement (14) et par lequel il est monté basculant sur le tourillon (30).

54. Couverture selon l'une des revendications 50 à 53, caractérisée par le fait que l'organe de freinage (50) contient un logement (55) coaxial avec le coussinet (54) qui fait suite axialement à celui-ci vers l'intérieur du cadre (13) et dans lequel s'engage axialement la partie d'extrémité du profilé tubulaire (26) formant la gouttière longitudinale (25) prévu sur le couvercle (15).

55. Couverture selon l'une des revendications 51 à 54, caractérisée par le fait que le corps de friction (52), en particulier l'anneau, et le coussinet (54) font saillie axialement sur la face extérieure (56) de l'organe de freinage (50) dirigée vers la partie latérale (28).

56. Couverture selon l'une des revendications 50 à 55, caractérisée par le fait que l'organe de freinage (50) attaque par emboîtement le couvercle (15), en particulier une baguette en équerre (44) de celui-ci, à distance de l'axe de basculement (14).

57. Couverture selon la revendication 56, caractérisée par le fait que l'organe de freinage (50) présente à son extrémité un crochet (51) qui s'engage dans la baguette en équerre (44), en particulier coiffe l'aile inférieure (48) de celle-ci, et, lors de l'ouverture du couvercle (15), est entraîné par cette aile.

58. Couverture selon l'une des revendications 50 à 57, caractérisée par le fait que l'organe de freinage (50) est constitué d'une seule pièce moulée en plastique.

59. Couverture selon l'une des revendications 1 à 58, caractérisée par le fait que les parties latérales (28, 29) sont à peu près deux fois plus hautes que les baguettes profilées (57, 58) et dépassent d'environ la moitié de leur hauteur du bord supérieur de celles-ci.

60. Couverture selon l'une des revendications 41 à 59, caractérisée par le fait que l'aile avant (41) du couvercle (15) a une hauteur correspondant environ à la moitié de la hauteur des parties latérales (28, 29) et, lorsque le couvercle (15) est fermé, s'appuie par son bord inférieur à peu près sur le côté supérieur de la baguette profilée avant (57), tandis que les deux bords latéraux s'étendant transversalement du couvercle (15) se placent à peu près entre les parties latérales (28, 29).

61. Couverture selon l'une des revendications 1 à 60, caractérisée par le fait que les baguettes profilées (57, 58) présentent en coupe à peu près deux profils en 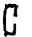 (59, 60) situés l'un au-dessus de l'autre et réunis dans la zone du milieu de la hauteur, un profit en T (61) étant joint sur le côté intérieur au profit en 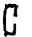 supérieur (59).

62. Couverture selon l'une des revendications 1 à 61, caractérisée par le fait que les baguettes profilées (57, 58) présentent sur leur bord inférieur une gouttière (62) dans laquelle s'emboîte à peu près un ergot saillant (63) fait sur chaque partie latérale (28, 29).

63. Couverture selon l'une des revendications 1 à 62, caractérisée par le fait que les baguettes profilées (57, 58) présentent sur leur côté intérieur, une certaine distance au-dessus de leur bord inférieur, un logement à peu près en forme de gouttière (64) dans lequel peut s'engager une vis de fixation (65) montée dans chaque partie latérale (28, 29).

64. Couverture selon la revendication 1, caractérisée par le fait que l'aile en équerre présente dans le prolongement de l'aile montante (67) une partie dirigée vers le bas (68) qui coiffe du côté intérieur la paroi (12) de l'aquarium (11), du terrarium ou du dispositif semblable sur le bord duquel est posé le cadre (13), la paroi (12) étant logée entre cette partie d'aile coiffant du côté intérieur (68) et les autres parties ailes saillant vers l'intérieur (70, 71) des baguettes profilées (57, 58), et le cadre (13) reposant sur la face étroite supérieure de la paroi (12) par l'aile horizontale (66) de l'aile en équerre saillant vers l'intérieur.

65. Couverture selon l'une des revendications 1 à 64, caractérisée par le fait que sur chaque partie latérale (28, 29) est faite, une certaine distance au-dessus de l'ergot (63), une patte saillant vers l'intérieur (69) qui s'engage dans la partie d'extrémité sur le côté arrière des baguettes profilées (57, 58) et au-dessous de l'aile horizontale (66) de l'aile en équerre de celles-ci.

66. Couverture selon l'une des revendications 1 à 65, caractérisée par le fait que les baguettes profilées (57, 58) présentent dans la zone de leur bord supérieur et de leur bord inférieur des ailes en 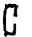 dirigées vers l'intérieur (70, 71) et peuvent être étreintes de l'extérieur par des éléments de support (72), par exemple des pinces de support de câble qui présentent par exemple une partie pince à peu près en forme de C (73).

67. Couverture selon l'une des revendications 44 à 46, caractérisée par le fait que la boîte à inductance (45, 46) du dispositif d'éclairage (17) est placée et tenue par exemple de façon amovible entre les deux baguettes en équerre (43, 44) situées sur la face inférieure du couvercle (15).

68. Couverture selon l'une des revendications 44 à 67, caractérisée par le fait que chaque boîte à inductance (45, 46) présente sur chaque côté un ou de préférence plusieurs crochets à ressort espacés (74) qui coiffent par leur partie crochet l'aile inférieure (47, 48) de la baguette en équerre (43, 44).

69. Couverture selon l'une des revendications 44 à 68, caractérisée par le fait que chaque boîte à inductance (45, 46) présente sur chaque côté une ou de préférence plusieurs pattes montantes (75) qui servent de pattes de guidage, de pattes d'ajustement ou autres et peuvent s'appuyer par leur face extérieure sur le bord dirigé vers l'intérieur de l'aile inférieure (47, 48) de la baguette en équerre associée (43, 44).

70. Couverture selon l'une des revendications 44 à 69, caractérisée par le fait que chaque boîte à inductance (45, 46) présente sur chaque côté deux logements de fixation espacés destinés à recevoir une douille (76, 77).

71. Couverture selon la revendication 70, caractérisée par le fait que le logement de fixation désiré de chaque côté est choisi et fixé à l'avance lors de la fabrication de la boîte à inductance (45, 46), et la boîte à inductance (45, 46) est de préférence en plastique.
